# EUROPEAN PATENT APPLICATION

(11) **EP 1 703 370 A2**
(43) Date of publication of application: **20.09.2006**
(21) Application number: 05257352.4
(22) Date of filing: 29.11.2005
(51) Int. Cl.: G06F 3/12

(54) **Software authentication system, software authencation program, and software authentication method**

(30) Priority: 14.03.2005 JP 2005070505; 30.08.2005 JP 2005249530
(71) Applicant: SEIKO EPSON CORPORATION, Tokyo 160-0811 (JP)
(72) Inventor: Taniguchi, Shinya, Seiko Epson Corporation, Suwa-shi Nagano-ken 392-8502 (JP); Fukao, Akihito, Seiko Epson Corporation, Suwa-shi Nagano-ken 392-8502 (JP)
(74) Representative: Sturt, Clifford Mark

(57) **Abstract**

A software authentication system authenticates software including a function module on the basis of log information created by a resource management system. The resource management system includes a resource measuring unit that measures an amount of resources used by the function module in a first execution environment; a resource exchanging unit that exchanges the amount of resources measured by the resource measuring unit with an amount of resources used by the function module in a second execution environment; a resource restriction information acquiring unit that acquires resource restriction information indicating a resource restriction condition; a log information creating unit that creates the log information indicating that the amount of resources used by the function module has reached an upper limit value on the basis of the amount of resources exchanged by the resource exchanging unit and the resource restriction information acquired by the resource restriction information acquiring unit. In addition, the software authentication system includes a log information acquiring unit that acquires the log information; an operation determining unit that determines whether the amount of resources used by the function module does not reach an upper limit value on the basis of the log information acquired by the log information acquiring unit; and a software authenticating unit that adds authentication information to the software when it is determined by the operation determining unit that the amount of resources used by the function module does not reach the upper limit value.

## Description

The present invention relates to a software authentication system, to a software authentication program, and to a software authentication method. More particularly, the invention relates to a software authentication system, to a software authentication program, and to a software authentication method, which are suitable for facilitating software development and developing software having high stability by verifying the operation of the software before introducing it in an execution environment.

In assembly apparatuses, such as printers, software, which is called an application for assembly, is installed therein, such that the operation is controlled. However, since dedicated development environment and dedicated hardware are generally necessary for creating the application for assembly, it is difficult for each individual person to create the application for assembly. In order to solve this problem, an information processing device has been proposed in JP-A-2004-185595.

According to the information processing device in JP-A-2004-185595, it has an emulator that can execute an application executed on an image forming apparatus on a personal computer (PC). Thereby, the application for assembly can be developed without using an assembly apparatus.

In addition, an application for assembly created by a person who is untrained of the programming technology may cause unexpected operation to be generated, so that the assembly apparatus may not continuously operate. In order to solve this problem, a resource management system has been proposed in JP-A-2004-94782.

According to the resource management system in JP-A-2004-94782, it has a restriction setting unit that sets an operation range for resources used when software is executed on an information apparatus, and an operation range verifying unit that verifies whether the operation is performed within the operation range set by the restriction setting unit. When a resource use request is made from the software, the operation range verifying unit compares the set operation range with the amount of request resources, and stops the execution of the software when the amount of request resources is not within the operation range.

According to a technology disclosed in JP-A-2004-185595, since the application for assembly can be virtually executed on the PC, the operation of the application for assembly can be verified on the PC to some degree.

However, in a case where the application for assembly is executed on the PC and in a case where the application for assembly is executed on the assembly apparatus, the amount of resources (for example, memory) used by the application for assembly in the respective execution environment are not entirely equal to each other. This is because the environments for executing the application for assembly are different from each other. For example, a library is used in order to execute the application for assembly, but the library has a different program structure in each library for a PC or a library for an assembly apparatus because of the difference between hardware structures. For this reason, even when the same function is used, different libraries, which have the same function but have different program structures, are linked on the PC and the apparatus for assembly, such that objects are created. These objects have different structures, so that the amounts of used resources are not entirely equal to each other. Accordingly, when the application for assembly, which is properly operated on the PC, is installed in the assembly apparatus, the amount of used resources considerably increases. As a result, when a plurality of applications for assembly are driven on the assembly apparatus, the plurality of applications for assembly compete with each other, so that the operation may become unstable. In particular, since the assembly apparatus such as a printer has a very small amount of used resources not similarly to the PC, it is important that the amount of resources used by each application for assembly is minutely managed in order to achieve the stable operation.

In addition, the predetermined restriction exists in a file name or path name of a file handled by the application for assembly and the application for assembly. There is a case in which the file length or character kind used in the PC cannot be used in the assembly apparatus. Accordingly, when the application for assembly, which is properly operated on the PC, is installed in the assembly apparatus, due to the file name or path name not being suitable, the operation may become unstable.

According to a technology disclosed in JP-A-2004-94782, it is possible to prevent the operation from becoming unstable when the application for assembly is executed in the assembly apparatus. However, it is not possible to verify the amount of resources used by the application for assembly, the file name or the path name before introducing it to the assembly apparatus.

These problems are not limited to the case in which the application for assembly is executed on the assembly apparatus, but may occur in all cases in which the software to be executed in a predetermined execution environment is developed in another execution environment.

An advantage of some aspects of the invention is that it provides a software authentication system, a software authentication program, and a software authentication method, which are suitable for facilitating software development and developing software having high stability by verifying the operation of the software before introducing it in an execution environment.

According to a first aspect of the invention, there is provided a software authentication system which authenticates software including a function module on the basis of log information created by a resource management system. The resource management system includes: a resource measuring unit that measures an amount of resources used by the function module in first execution environment; a resource exchanging unit that exchanges the amount of resources measured by the resource measuring unit with an amount of resources used by the function module in a second execution environment; a resource restriction information acquiring unit that acquires resource restriction information indicating a resource restriction condition; a log information creating unit that creates the log information indicating that the amount of resources used by the function module has reached an upper limit value on the basis of the amount of resources exchanged by the resource exchanging unit and the resource restriction information acquired by the resource restriction information acquiring unit. The software authentication system includes a log information acquiring unit that acquires the log information; an operation determining unit that determines whether the amount of resources used by the function module does not reach an upper limit value on the basis of the log information acquired by the log information acquiring unit; and a software authenticating unit that adds authentication information to the software when it is determined by the operation determining unit that the amount of resources used by the function module does not reach the upper limit value.

According to this aspect, in the resource management system, the resource measuring unit measures the amount of resources used by the function module in the first execution environment, and the resource exchanging unit exchanges the amount of resources measured by the resource measuring unit with the amount of resources used by the function module in the second execution environment. Further, the resource restriction information is acquired by the resource restriction information acquiring unit. In addition, the log information creating unit creates the log information indicating that the amount of resources used by the function module has reached the upper limit value on the basis of the amount of resources exchanged by the resource exchanging unit and the resource restriction information acquired by the resource restriction information acquiring unit.

In the software authentication system, the log information created by the log information acquiring unit is acquired, and the operation determining unit determines whether the amount of resources used by the function module does not reach an upper limit value on the basis of the log information acquired by the log information acquiring unit. As a result, if it is determined that the amount of resources used by the function module does not reach the upper limit value, the software authenticating unit adds the authentication information to the software.

Thereby, since the authentication information is added to only the software in which the amount of resources used by the function module does not reach the upper limit value, the operation of the software can be assured. Accordingly, it is possible to realize that software development can be easily performed and software with high stability can be developed as compared with the

### related art.

Here, the resources mean resources which can be used by the function module and include not only hardware resources but also other resources such as software resources. The same is true for a software authentication system, a software authentication program, and a software authentication method, which will be described in detail below.

Further, the amount of resources is a concept which includes a memory capacity used by the function module and the number of function modules which can be activated. In addition, the amount of resources is a concept which includes an amount of resources secured by the application using the function module (memory capacity and the number of function modules). The same is true for a software authentication system, a software authentication program, and a software authentication method, which will be described in detail below.

In addition, the log information acquiring unit may have any structure so long as it can acquire the log information. For example, the log information may be input through the input device, the log information may be obtained or received from an external device or the like, the log information may be read from a memory device, a storage medium or the like, and the log information may be extracted from the function module and the data other than the function module. Accordingly, the acquisition is a concept which includes at least input, obtainment, reception, read, and extract. The same is true for a software authentication system, which will be described in detail below.

Further, the following method may be considered as the resource exchange method. For example, a first method (predetermined ratio exchange method) calculates an amount of resources exchanged by increasing or decreasing the measured amount of resources by an amount of resources with a predetermined ratio. A second method (predetermined amount exchange method) calculates an amount of resources exchanged by increasing or decreasing the measured amount of resources by a predetermined amount of resources regardless of the measured amount of resources. A third method (integer exchange method) calculates an amount of resources obtained by exchanging the measured amount of resources with a constant regardless of the measured amount of resources. A fourth method (mixed exchange method) selects any of the first to third methods on the basis of the resource kind or measured amount of resources and calculates an amount of resources obtained by performing the exchange using the selected method. The selection of the exchange methods may be performed by, for example, setting threshold values A and B, which will be described in detail below. When the condition of the amount of resources < A is satisfied, the constant exchange method is selected, when the condition of A < the amount of resources < B is satisfied, the predetermined amount exchange method is selected, and when the condition of B < the amount of resources is satisfied, the predetermined ratio exchange method is selected. However, here, A is smaller than B (A < B). The same is true for a software authentication system, a software authentication program, and a software authentication method, which will be described in detail below.

Further, as the resource restriction condition, for example, the upper limit value of the resource in the second execution environment can be set. The same is true for a software authentication program, and a software authentication method, which will be described in detail below.

Furthermore, the authentication information is information used in order to determine whether the software is executed or not when making the software executed in the second execution environment. Preferably, the authentication information is information which other people cannot reproduce in terms of security and which can determine whether or not the software is executed. In addition, any form may be used as an information form. The same is true for a software authentication system, a software authentication program, and a software authentication method, which will be described in detail below.

Further, the software authentication system may be achieved by a single device, a terminal or the like, and may be achieved by a network system to which a plurality of devices, terminals or the like are connected such that the communication can be performed. In a case of the latter, each constituent element may be any one of the plurality of devices when it is connected to the network system such that the communication can be performed. The same is true for a software authentication system, which will be described in detail below.

In addition, the following two structures may be used as specific structures of the resource management system.

A first structure provides a resource management system that manages resources used by software including a first function module and a plurality of second function modules necessitating the first function module at the time of execution. The resource management system includes a resource measuring unit that measures an amount of resources used by the second function module in the first execution environment, a resource exchanging unit that exchanges the amount of resources measured by the resource measuring unit with an amount of resources used by the second function module in the second execution environment, a resource restriction information acquiring unit that acquires resource restriction information indicating a resource restriction condition in the second execution environment, and a log information creating unit that creates the log information indicating that the amount of resources used by the function module has reached an upper limit value on the basis of the resource restriction information measured by the resource restriction information acquiring unit and the amount of resources exchanged by the resource exchanging unit.

A second structure provides a resource management system that manages resources used by software including a first function module and a plurality of second function modules necessitating the first function module at the time of execution. The resource management system includes a resource measuring unit that measures an amount of resources used by the first function module in the first execution environment in order to execute the second function modules, a resource exchanging unit that exchanges the amount of resources measured by the resource measuring unit with the amount of resources used by the second function module in the second execution environment, a resource restriction information acquiring unit that acquires resource restriction information indicating a resource restriction condition in the second execution environment, and a log information creating unit that creates the log information indicating that the amount of resources used by the function module has reached an upper limit value on the basis of the resource restriction information measured by the resource restriction information acquiring unit and the amount of resources exchanged by the resource exchanging unit. The same is true for a software authentication program and a software authentication method, which will be described in detail below.

According to a second aspect of the invention, there is provided a software authentication system which authenticates software including a function module on the basis of log information created by a resource management system. The resource management system includes a resource measuring unit that measures an amount of resources used by the function module in the first execution environment; a resource upper limit value acquiring unit that acquires an upper limit value of resources in the second execution environment; a resource exchanging unit that exchanges the upper limit value of resources acquired by the resource upper limit value acquiring unit with an upper limit value of resources in the first execution environment; and a log information creating unit that creates the log information indicating that the amount of resources used by the function module has reached an upper limit value on the basis of the amount of resources measured by the resource measuring unit and the upper limit value of resources exchanged by the resource exchanging unit. In addition, the software authentication system includes a log information acquiring unit that acquires the log information; an operation determining unit that determines whether the amount of resources used by the function module does not reach an upper limit value on the basis of the log information acquired by the log information acquiring unit; and a software authenticating unit that adds authentication information to the software when it is determined by the operation determining unit that the amount of resources used by the function module does not reach the upper limit value.

According to this aspect, in the resource management system, the resource measuring unit measures an amount of resources used by the function module in first execution environment. In addition, the resource upper limit value acquiring unit acquires an upper limit value of resources in the second execution environment, and the resource exchanging unit exchanges the upper limit value of resources acquired by the resource upper limit value acquiring unit with an upper limit value of resources in the first execution environment. Further, the log information creating unit creates the log information indicating that the amount of resources used by the function module has reached an upper limit value on the basis of the amount of resources measured by the resource measuring unit and the upper limit value of resources exchanged by the resource exchanging unit.

In the resource management system, the log information created by the log information acquiring unit is acquired, and the operation determining unit determines whether the amount of resources used by the function module does not reach an upper limit value on the basis of the log information acquired by the log information acquiring unit. As a result, if it is determined that the amount of resources used by the function module does not reach the upper limit value, the software authenticating unit adds the authentication information to the software.

Thereby, since the authentication information is added to only the software in which the amount of resources used by the function module does not reach the upper limit value, the operation of the software can be assured. Accordingly, it is possible to realize that software development can be easily performed and software with high stability can be developed as compared with the

### related art.

In addition, the following two structures may be used as specific structures of the resource management system.

A first structure provides a resource management system that manages resources used by software including a first function module and a plurality of second function modules necessitating the first function module at the time of execution. The resource management system includes a resource measuring unit that measures an amount of resources used by the second function module in the first execution environment; a resource upper limit value acquiring unit that acquires an upper limit value of resources in the second execution environment; a resource exchanging unit that exchanges the upper limit value of resources acquired by the resource upper limit value acquiring unit with an upper limit value of resources in the first execution environment; and a log information creating unit that creates the log information indicating that the amount of resources used by the function module has reached an upper limit value on the basis of the amount of resources measured by the resource measuring unit and the upper limit value of resources exchanged by the resource exchanging unit.

A second structure provides a resource management system that manages resources used by software including a first function module and a plurality of second function modules necessitating the first function module at the time of execution. The resource management system includes a resource measuring unit that measures an amount of resources used by the first function module in the first execution environment in order to execute the second function modules; a resource upper limit value acquiring unit that acquires an upper limit value of resources in the second execution environment; a resource exchanging unit that exchanges the upper limit value of resources acquired by the resource upper limit value acquiring unit with an upper limit value of resources in the first execution environment; and a log information creating unit that creates the log information indicating that the amount of resources used by the function module has reached an upper limit value on the basis of the amount of resources measured by the resource measuring unit and the upper limit value of resources exchanged by the resource exchanging unit. The same is true for a software authentication program and a software authentication method, which will be described in detail below.

According to a third aspect of the invention, there is provided a software authentication system which authenticates software including a function module on the basis of log information created by a resource management system. The resource management system includes a resource monitoring unit that monitors the use situation of resources used by the function module in the second execution environment different from first execution environment; and a log information creating unit that creates the log information indicating the resource use situation on the basis of the monitoring result of the resource monitoring unit. In addition, the software authentication system includes a log information acquiring unit that acquires the log information; an operation determining unit that determines whether the resource use situation is suitable for the first execution environment on the basis of the log information acquired by the log information acquiring unit; and a software authenticating unit that adds authentication information to the software when it is determined by the operation determining unit that the resource use situation is suitable for the first execution environment.

According to this aspect, in the resource management system, the resource monitoring unit monitors a use situation of resources used by the function module in second execution environment, and the log information creating unit creates the log information indicating the resource use situation on the basis of the monitoring result of the resource monitoring unit.

In the resource management system, the log information created by the log information acquiring unit is acquired, and the operation determining unit determines whether the resource use situation is suitable for the first execution environment on the basis of the log information acquired by the log information acquiring unit. As a result, if it is determined that the resource use situation is suitable for the first execution environment, the software authenticating unit adds the authentication information to the software.

Thereby, since the authentication information is added to only the software in which the use situation of resources used by the function module is suitable for the first execution environment, the operation of the software can be relatively assured. Accordingly, it is possible to realize that software development can be easily performed and software with high stability can be developed as compared with the related art.

Here, the resource use situation is a concept that includes the function module or lengths of a file name and a path name for a file handled by the function module, and character kinds used in the file name and the path name. The same is true for a software authentication program and a software authentication method, which will be described in detail below.

Preferably, the software authentication system further includes an execution file acquiring unit that acquires an execution file necessary for executing the function module; and a second operation determining unit that determines whether a command or a command group constituting the function module is composed of a command or a command group executed in the first execution environment on the basis of the execution file acquired by the execution file acquiring unit. The software authenticating unit adds authentication information to the software when it is determined by the second operation determining unit that the command or the command group is only composed of the command or the command group executed in the first execution environment.

According to this aspect, the execution file acquiring unit acquires the execution file necessary for executing the function module, and the second operation determining unit determines whether a command or a command group constituting the function module is only composed of a command or a command group executed in the first execution environment on the basis of the execution file acquired by the execution file acquiring unit. As a result, if it is determined that the command or the command group is only composed of the command or the command group executed in the first execution environment, the software authenticating unit adds authentication information to the software.

Thereby, since the authentication information is added to only the software in which the command or the command group constituting the function module is only composed of the command or the command group executed in the first execution environment, the operation of the software can be assured.

According to a fourth aspect of the invention, there is provided a software authentication program which authenticates software including a function module on the basis of log information created by a resource management system. The resource management system includes: a resource measuring unit that measures an amount of resources used by the function module in the first execution environment; a resource exchanging unit that exchanges the amount of resources measured by the resource measuring unit with an amount of resources used by the function module in the second environment; a resource restriction information acquiring unit that acquires resource restriction information indicating a resource restriction condition; a log information creating unit that creates the log information indicating that the amount of resources used by the function module has reached an upper limit value on the basis of the amount of resources exchanged by the resource exchanging unit and the resource restriction information acquired by the resource restriction information acquiring unit. The software authentication program includes a program that makes a computer execute a process including: acquiring the log information; determining whether the amount of resources used by the function module does not reach an upper limit value on the basis of the log information acquired by the acquisition of the log information; and adding authentication information to the software when it is determined by the determination that the amount of resources used by the function module does not reach the upper limit value.

According to this aspect, if the program is read by the computer and the computer executes the process in accordance with the read program, it is possible to achieve the same operation and effect as the software authentication system according to the first aspect of the invention.

Here, during the acquiring of the log information, any form may be used so long as the log information can be acquired. For example, the log information may be input through the input device or the like, the log information may be obtained or received from an external device or the like, the log information may be read from a memory device or a storage medium, and the log information may be extracted from the function module and the data other than the function module. Accordingly, the acquisition includes at least input, obtainment, reception, read, and extract. The same is true for a software authentication program and a software authentication method, which will be described in detail below.

According to a fifth aspect of the invention, there is provided a software authentication program which authenticates software including a function module on the basis of log information created by a resource management system. The resource management system includes: a resource measuring unit that measures an amount of resources used by the function module in the first execution environment; a resource upper limit value acquiring unit that acquires an upper limit value of resources in the second execution environment; a resource exchanging unit that exchanges the upper limit value of resources measured by the resource upper limit value acquiring unit with an upper limit value of resources in the first execution environment; and a log information creating unit that creates the log information indicating that the amount of resources used by the function module has reached an upper limit value on the basis of the amount of resources measured by the resource measuring unit and the upper limit value of resources exchanged by the resource exchanging unit. The software authentication program includes a program that makes a computer execute a process including: acquiring the log information; determining whether the amount of resources used by the function module does not reach an upper limit value on the basis of the log information acquired by the acquisition of the log information; and authenticating software by adding authentication information to the software when it is determined by the determination that the amount of resources used by the function module does not reach the upper limit value.

According to this aspect, if the program is read by the computer and the computer executes the process in accordance with the read program, it is possible to achieve the same operation and effect as the software authentication system according to the second aspect of the invention.

According to a sixth aspect of the invention, there is provided a software authentication program which authenticates software including a function module on the basis of log information created by a resource management system. The resource management system includes: a resource monitoring unit that monitors a use situation of resources used by the function module in second execution environment different from the first execution environment; and a log information creating unit that creates the log information indicating the resource use situation on the basis of the monitoring result of the resource monitoring unit. The software authentication program includes a program that makes a computer execute: a process including acquiring the log information; determining whether the resource use situation is suitable for the first execution environment on the basis of the log information acquired by the acquisition of the log information; and adding authentication information to the software when it is determined by the determination that the resource use situation is suitable for the first execution environment.

According to this aspect, if the program is read by the computer and the computer executes the process in accordance with the read program, it is possible to achieve the same operation and effect as the software authentication system according to the third aspect of the invention.

Preferably, the software authentication program further includes a program that makes a computer execute a process including: acquiring an execution file necessary for executing the function module; and determining whether a command or a command group constituting the function module is composed of a command or a command group executed in the first execution environment on the basis of the execution file acquired by the acquisition of the execution file. During the authentication, authentication information is added to the software when it is determined by the determination that the command or the command group is composed of the command or the command group executed in the first execution environment.

According to this aspect, if the program is read by the computer and the computer executes the process in accordance with the read program, it is possible to achieve the same operation and effect as the software authentication system according to the fourth aspect of the invention.

According to a seventh aspect of the invention, there is provided a software authentication method which authenticates software including a function module on the basis of log information created by a resource management system. The resource management system includes: a resource measuring unit that measures an amount of resources used by the function module in the first execution environment; a resource exchanging unit that exchanges the amount of resources measured by the resource measuring unit with an amount of resources used by the function module in the second execution environment; a resource restriction information acquiring unit that acquires resource restriction information indicating a resource restriction condition; a log information creating unit that creates the log information indicating that the amount of resources used by the function module has reached an upper limit value on the basis of the amount of resources exchanged by the resource exchanging unit and the resource restriction information acquired by the resource restriction information acquiring unit. The software authentication method includes: acquiring the log information; determining whether the amount of resources used by the function module does not reach an upper limit value on the basis of the log information acquired by the acquisition of the log information; and adding authentication information to the software when it is determined by the determination that the amount of resources used by the function module does not reach the upper limit value.

Thereby, it is possible to achieve the same effect as the software authentication system according to the first aspect of the invention.

According to an eighth aspect of the invention, there is provided a software authentication method which authenticates software including a function module on the basis of log information created by a resource management system. The resource management system includes: a resource measuring unit that measures an amount of resources used by the function module in the first execution environment; a resource exchanging unit that exchanges the amount of resources measured by the resource measuring unit with an amount of resources used by the function module in the second execution environment; a resource restriction information acquiring unit that acquires resource restriction information indicating a resource restriction condition; a log information creating unit that creates the log information indicating that the amount of resources used by the function module has reached an upper limit value on the basis of the amount of resources exchanged by the resource exchanging unit and the resource restriction information acquired by the resource restriction information acquiring unit. The software authentication method includes: acquiring the log information by an operation unit; determining by the operation unit whether the amount of resources used by the function module does not reach an upper limit value on the basis of the log information acquired during the acquiring of the log information by the operation unit; and adding authentication information to the software by the operation unit when it is determined by the determination that the amount of resources used by the function module does not reach the upper limit value.

Thereby, it is possible to achieve the same effect as the software authentication system according to the first aspect of the invention.

According to a ninth aspect of the invention, there is provided a software authentication method which authenticates software including a function module on the basis of log information created by a resource management system. The resource management system includes: a resource measuring unit that measures an amount of resources used by the function module in the first execution environment; a resource upper limit value acquiring unit that acquires an upper limit value of resources in the second execution environment; a resource exchanging unit that exchanges the upper limit value of resources measured by the resource upper limit value acquiring unit with an upper limit value of resources in the first execution environment; and a log information creating unit that creates the log information indicating that the amount of resources used by the function module has reached an upper limit value on the basis of the amount of resources measured by the resource measuring unit and the upper limit value of resources exchanged by the resource exchanging unit. The software authentication method includes: acquiring the log information; determining whether the amount of resources used by the function module does not reach an upper limit value on the basis of the log information acquired by the acquisition of the log information; and adding authentication information to the software when it is determined by the determination that the amount of resources used by the function module does not reach the upper limit value.

Thereby, it is possible to achieve the same effect as the software authentication system according to the second aspect of the invention.

According to a tenth aspect of the invention, there is provided a software authentication method which authenticates software including a function module on the basis of log information created by a resource management system. The resource management system includes: a resource measuring unit that measures the amount of resources used by the function module in the first execution environment; a resource upper limit value acquiring unit that acquires an upper limit of resources in the second execution environment; a resource exchanging unit that exchanges the upper limit of resources acquired by the resource upper limit value acquiring unit with an upper limit value of resources in the first execution environment; a log information creating unit that creates the log information indicating that the amount of resources used by the function module has reached an upper limit value on the basis of the amount of resources exchanged by the resource exchanging unit and the upper limit of resources exchanged by the resource exchange unit. The software authentication method includes: acquiring the log information by an operation unit; determining by the operation unit whether the amount of resources used by the function module does not reach an upper limit value on the basis of the log information acquired during acquiring of the log information by the operation unit; and adding authentication information to the software by the operation unit when it is determined by the determination that the amount of resources used by the function module does not reach the upper limit value.

Thereby, it is possible to achieve the same effect as the software authentication system according to the second aspect of the invention.

According to an eleventh aspect of the invention, there is a software authentication method which authenticates software including a function module on the basis of log information created by a resource management system. The resource management system includes: a resource monitoring unit that monitors a use situation of resources used by the function module in the second execution environment different from the first execution environment; and a log information creating unit that creates the log information indicating the resource use situation on the basis of the monitoring result of the resource monitoring unit. The software authentication method includes: acquiring the log information; determining whether the resource use situation is suitable for the first execution environment on the basis of the log information acquired by the acquisition of the log information; and adding authentication information to the software when it is determined by the determination that the resource use situation is suitable for the first execution environment.

Thereby, it is possible to achieve the same effect as the software authentication system according to the third aspect of the invention.

According to a twelfth aspect of the invention, there is a software authentication method which authenticates software including a function module on the basis of log information created by a resource management system. The resource management system includes: a resource monitoring unit that monitors a use situation of resources used by the function module in the second execution environment different from the first execution environment; and a log information creating unit that creates the log information indicating the resource use situation on the basis of the monitoring result of the resource monitoring unit. The software authentication method includes: acquiring the log information by an operation unit; determining by the operation unit whether the resource use situation is suitable for the first execution environment on the basis of the log information acquired by the acquisition of the log information; and adding authentication information to the software by the operation unit when it is determined that the resource use situation is suitable for the first execution environment.

Thereby, it is possible to achieve the same effect as the software authentication system according to the third aspect of the invention.

Preferably, the software authentication method further includes: acquiring an execution file necessary for executing the function module; and determining whether a command or a command group constituting the function module is composed of a command or a command group executed in the first execution environment on the basis of the execution file acquired by the acquisition of the execution file. During the adding of the authentication information to the software, the authentication information is added to the software when it is determined by the determination that the command or the command group constituting the function module is composed of the command or the command group executed in the first execution environment.

Thereby, it is possible to achieve the same effect as the software authentication system according to the fourth aspect of the invention.

Embodiments of the invention will now be described by way of further example only and with reference to the accompanying drawings wherein like numbers reference like elements; in which:-

Fig. 1 is a diagram illustrating a structure of JAVA (registered trademark) software.

Fig. 2 is a function block diagram schematically illustrating the function of a host terminal 100.

Fig. 3 is a block diagram illustrating a structure of hardware of a host terminal 100.

Fig. 4 is a diagram illustrating a data structure of resource restriction information 400.

Fig. 5 is a diagram illustrating a data structure of module information 420.

Fig. 6 is a diagram illustrating a data structure of an execution environment information registration module 440.

Fig. 7 is a diagram illustrating a data structure of a resource exchange table 22.

Fig. 8 is a diagram illustrating a data structure of a resource management table 460.

Fig. 9 is a diagram illustrating a data structure of an event listener table 480.

Fig. 10 is a flowchart illustrating an individual function module restriction process.

Fig. 11 is a flowchart illustrating an execution propriety determination process.

Fig. 12 is a flowchart illustrating a module driving process.

Fig. 13 is a flowchart illustrating an event listener registration process.

Fig. 14 is a flowchart illustrating a class reading process.

Fig. 15 is a flowchart illustrating an event listener restriction process.

Fig. 16 is a flowchart illustrating an event listener execution process.

Fig. 17 is a flowchart illustrating an instance deletion process.

Fig. 18 is a flowchart illustrating a module authentication process.

Fig. 19 is a diagram illustrating contents of a log file in a case in which an error is generated.

Fig. 20 is a diagram illustrating contents of a log file in a case in which an error is not generated.

Fig. 21 is a time chart illustrating a case in which individual function modules b and c are executed in parallel to each other.

Fig. 22 is a functional block diagram schematically illustrating the function of a host terminal 100.

Fig. 23 is a diagram illustrating a data structure of a resource exchange table 22.

Fig. 24 is a diagram illustrating a data structure of a resource management table 460.

Fig. 25 is a flowchart illustrating an execution propriety determination process.

Fig. 26 is a functional block diagram schematically illustrating the function of a host terminal 100.

Fig. 27 is a flowchart illustrating an event listener execution process.

Fig. 28 is a flowchart illustrating a module authentication process.

Fig. 29 is a diagram illustrating contents of a log file in a case in which file operation is executed.

Fig. 30 is a diagram illustrating contents of a log file in a case in which file operation is executed.

Fig. 31 is a flowchart illustrating a module authentication process.

Fig. 32 is a flowchart illustrating a class verification process.

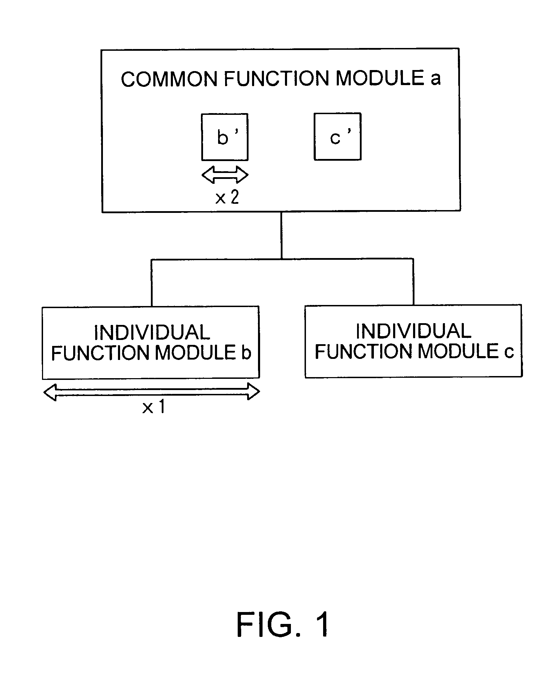

Hereinafter, a first embodiment of the invention will be described with reference to the accompanying drawings. Figs. 1 to 21 are diagrams illustrating a software authentication system, a software authentication program, and a software authentication method according to the first embodiment of the invention.

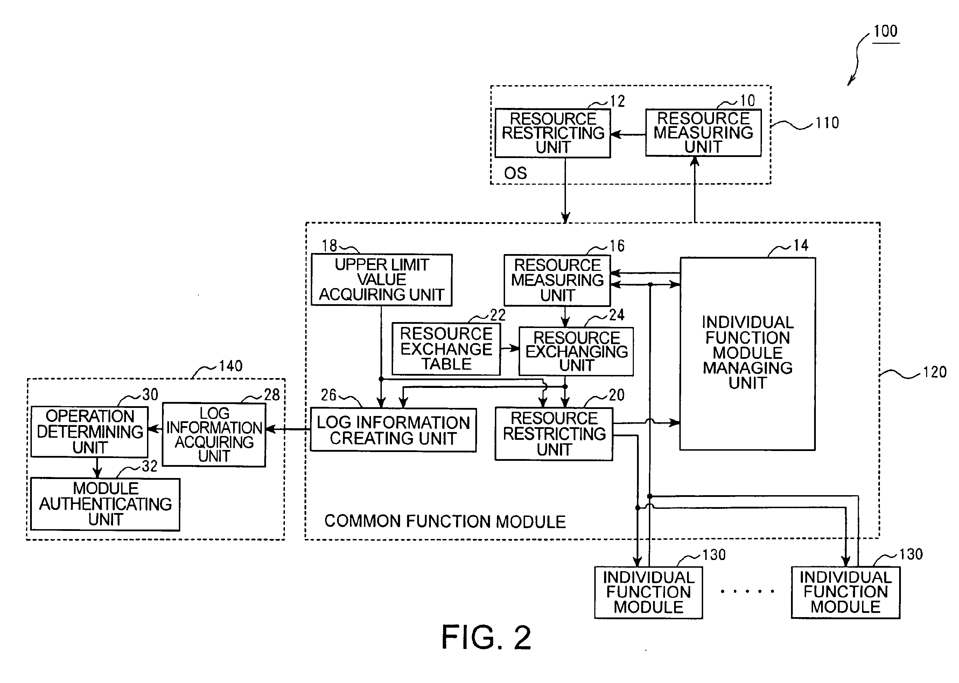

In the present embodiment, the software authentication system, the software authentication program, and the software authentication method of the invention are applied to a case in which a JAVA (registered trademark) class set for controlling the operation of a network printer is emulated in the execution environment of a JAVA application embodied on a host terminal 100, as shown in Fig. 2.

First, the function of the host terminal 100 to which the invention is applied will be schematically described.

Fig. 1 is a diagram illustrating a structure of the JAVA software.

In the execution environment of the JAVA application, a common function module, which is composed of a JAVA class for controlling the execution of the JAVA class set and a JAVA virtual machine (JVM), is executed on an operating system (OS), and an individual function module, which is the JAVA class set, is executed on the common function module. Here, the JAVA software is composed of the common function module and the individual function modules.

As shown in Fig. 1, the common function module can execute a plurality of individual function modules. Fig. 1 illustrates a case in which two individual function modules b and c are executed on the common function module a. Here, when an amount of resources, in which the individual function module b uses, is set to x1, an amount of resources, which is used for executing the individual function modules b by the common function module a, is set to x2, and an upper limit value of resources, in which the individual function module b can use, is set to Xₘₐₓ, the amounts of resources are restricted so as to satisfy the condition x1 + x2 ≤ Xₘₐₓ, in the present embodiment.

Fig. 2 is a block diagram schematically illustrating the function of the host terminal 100.

As shown in Fig. 2, the host terminal 100 includes an OS 110, a common function module 120, a plurality of individual function modules 130, and an application authentication unit 140.

The OS 110 has a resource measuring unit 10 that measures an amount of resources used by the JAVA software and a resource restricting unit 12 that restricts an amount of resources used by the entire JAVA software.

The resource restricting unit 12 restricts the amount of resources used by the JAVA software such that the amount of resources measured by the resource measuring unit 10 is less than a predetermined upper limit value allocated to the JAVA software.

The common function module 120 includes an individual function module managing unit 14 that manages the execution of each of the individual function modules 130, a resource measuring unit 16 that measures an amount of resources used by the individual function module managing unit 14 and the individual function module 130, a resource exchange table 22 which registers an exchange rate determined on the basis of an amount of resources used by the host terminal 100 on a predetermined condition and an amount of resources used by the network printer on the same predetermined condition, and a resource exchanging unit 24 that exchanges the amount of resources.

The resource measuring unit 16 measures an amount of resources used by each individual function module 130 and an amount of resources used by the individual function module managing unit 14 in order to execute the corresponding individual function module 130 for each individual function module 130.

The resource exchanging unit 24 exchanges the amount of resources measured by the resource measuring unit 16 with the amount of resources used by the network printer on the basis of the resource exchange table 22.

The common function module 120 further includes an upper limit value acquiring unit 18 that acquires an upper limit value of resources at the network printer used by the individual function module 130, a resource restricting unit 20 that restricts the amount of resources used by the individual function module managing unit 14 and the individual function module 130, and a log information creating unit 26 that creates log information.

The resource restricting unit 20 restricts the amount of resources used by the individual function module 130 and the amount of resources used by the individual function module managing unit 14 in order to execute the individual function module 130 such that the amount of resources exchanged by the resource exchanging unit 24 is less than the upper limit value acquired by the upper limit value acquiring unit 18.

The log information creating unit 26 creates log information indicating that the amount of resources used by the individual function module 130 has reached the upper limit value, when the amount of resources exchanged by the resource exchanging unit 24 is not less than the upper limit value acquired by the upper limit value acquiring unit 18.

An application authenticating unit 140 has a log information acquiring unit 28 that acquires log information created by the log information creating unit 26, an operation determining unit 30 that determines whether the amount of resources used by the individual function module 130 reaches the upper limit value on the basis of the log information acquired by the log information acquiring unit 28, and a module authenticating unit 32 that adds electronic signature information to the individual function module 130 when the operation determining unit 30 has determined that the amount of resources used by the individual function module 130 does not reach the upper limit value.

Next, a structure of the host terminal 100 will be described.

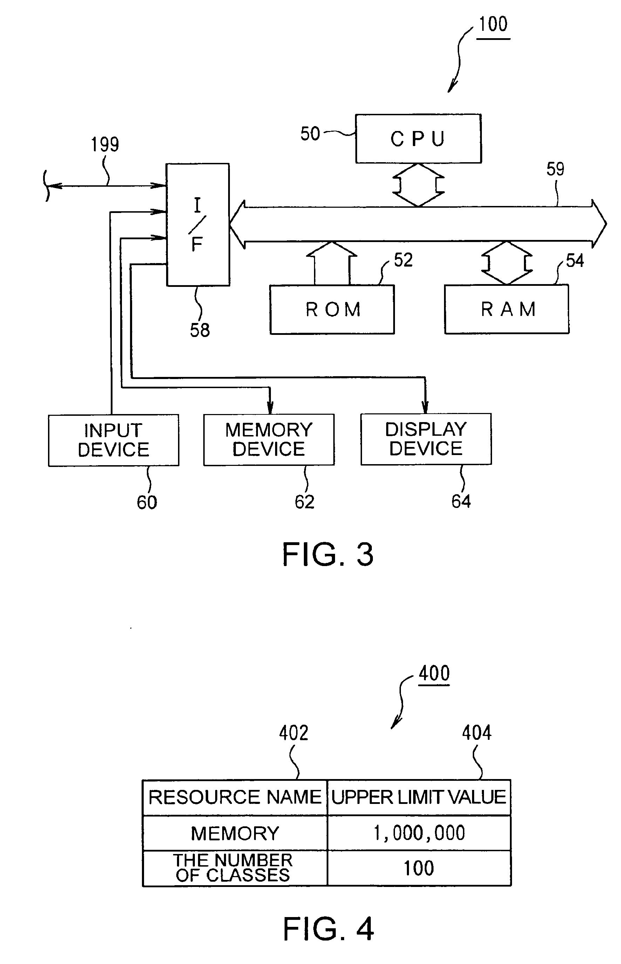

Fig. 3 is a block diagram illustrating a hardware structure of the host terminal 100.

As shown in Fig. 3, the host terminal 100 has a CPU 50 that performs operation and controls an overall system on the basis of a control program, a ROM 52 that stores the control program of the CPU 50 in a predetermined area in advance, a RAM 54 that stores data read from the ROM 52 or an operation result necessary during the operation of the CPU 50, and an I/F 58 through which data is input and output to an external device. The CPU 50, the ROM 52, the RAM 54, and the I/F 58 are connected to a bus 59 so as to exchange data with each other, and the bus 59 serves as a signal line that transmits the data.

The I/F 58 is connected to an input device 60 including a keyboard or a mouth which serves as a human interface and through which data can be input, a memory device 62 that stores data or a table as a file, a display device 64 that displays a screen on the basis of an image signal, and a signal line that connects the I/F 58 to a network 199, which are external devices.

Next, a data structure of the memory device 62 will be described.

The memory device 62 stores the common function module 120 and the plurality of individual function modules 130.

The individual function module 130 includes resource restriction information in which the upper limit value of resources at the network printer is stored.

Fig. 4 is a diagram illustrating a data structure of the resource restriction information 400.

As shown in Fig. 4, the resource restriction information 400 includes a field 402 that stores an upper limit value of the memory (RAM 54) which the individual function module 130 and the common function module 120 can use in order to execute the individual function module 130, and a field 404 that stores the number of classes which the individual function module 130 and the common function module 120 can drive in order to execute the individual function module 130.

Further, the individual function module 130 includes module information about the individual function module 130.

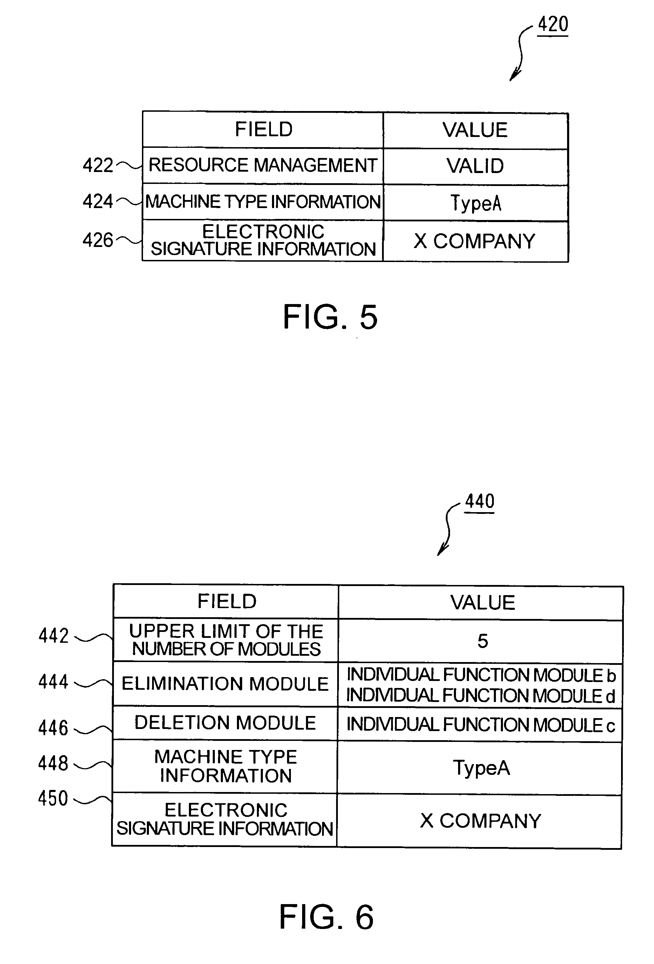

Fig. 5 is a diagram illustrating a data structure of the module information 420.

As shown in Fig. 5, the module information 420 includes a field 422 that stores information indicating whether the amount of resources used by the individual function module 130 is set to a subject to be restricted (hereinafter, referred to as resource management subject), a field 424 that stores a type of the network printer which the individual function module 130 can execute, and a field 426 that stores electronic signature information.

In Fig. 5, 'valid' is stored in the field 422. It means that the individual function module 130 is managed as a resource management subject. Further, 'Type A' is stored in the field 424, and 'X company' is stored in the field 426. It means that a type of machine, in which the individual function module 130 can execute, is 'Type A', and an electronic signature is made from the X company.

Further, the memory device 62 stores an execution environment information registration table in which execution environment information indicating the execution environment of the common function module 120 is registered.

Fig. 6 is a diagram illustrating a data structure of an execution environment information registration table 440.

As shown in Fig. 6, the execution environment information registration table 440 includes a field 442 in which an upper limit value of the number of the drivable individual function modules 130 is registered, a field 444 in which a name of each of the individual function modules 130 which should be executed is registered, a field 446 in which a name of each individual function module 130 which should be delete is registered, a field 448 in which a type of the network printer, which performs emulation, is registered, and a field 450 in which corresponding electronic signature information is registered.

In Fig. 6, '5' is registered in the field 442, 'individual function modules b and d' are registered in the field 444, and 'individual function module c' is registered in the field 446. It means that the five individual function modules 130 can be maximally driven, the individual function modules b and d can be executed when the common function module 120 is driven, and the individual function module c should be deleted. Further, 'Type A' is registered in the field 448, and 'X company' is registered in the field 450. It means that a type of network printer, which performs emulation, is 'Type A', and the individual function module 130 including electronic signature information of the X company can be executed.

Further, the memory device 62 stores a resource exchange table 22.

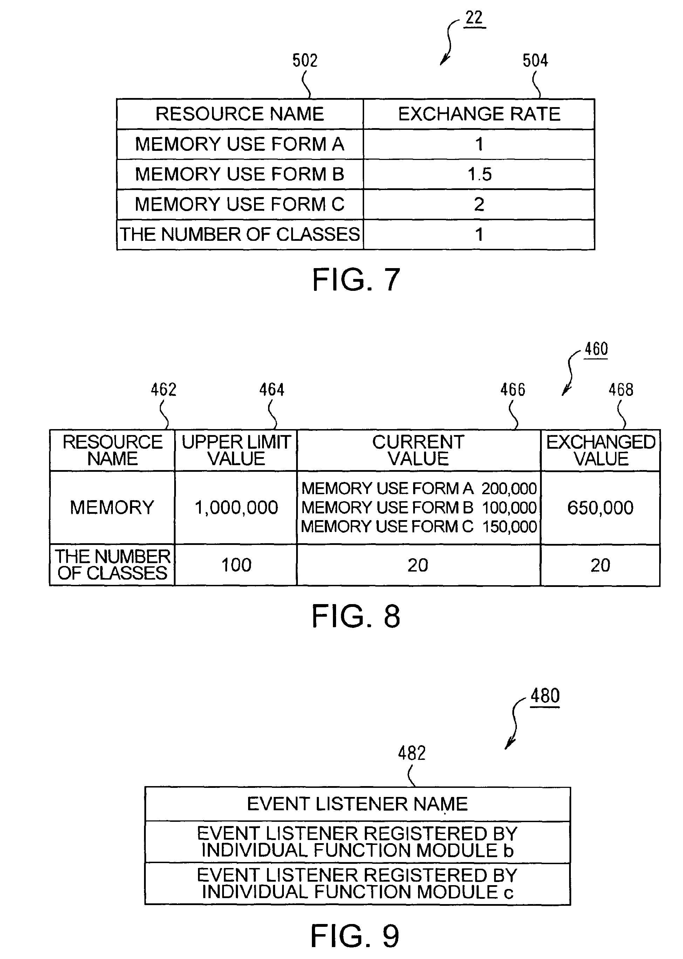

Fig. 7 is a diagram illustrating a data structure of the resource exchange table 22.

As shown in Fig. 7, in the resource exchange table 22, one record is registered for each resource type or use form. Each record includes a field 502 in which a resource name is registered and a field 504 in which an exchange rate is registered.

In Fig. 7, in a first-stage record, 'memory and use form A' are registered as a resource name, and '1' is registered as an exchange rate. It means that when the individual function module 130 uses a memory in accordance with the use form A, a memory capacity used by the individual function module 130 at the host terminal 100 is multiplied by the exchange rate '1' so as to be exchanged with a memory capacity used at the network printer. In the same manner, when the individual function module 130 uses memories in accordance with the use forms B and C, the exchange rates corresponding to the use forms B and C are used.

The use forms A to C of memories are determined by a function or library used by the common function module 120 and the individual function module 130. For example, when using a library handling an integer-type variable, the use form becomes the use form A, and when using a library or the like handling a double-type variable, the use form becomes the use form B.

Further, in a fourth-stage record, 'the number of classes' is registered as a resource name, and '1' is registered as an exchange rate. It means that the number of classes driven by the individual function module 130 at the host terminal 100 is multiplied by the exchange rate '1' so as to be exchanged with the number of classes driven at the network printer.

In addition, in the resource exchange table 22, an exchange rate of each of a plurality of test modules is determined on the basis of an amount of resources used by the corresponding test module at the host terminal 100 and the network printer, and a maximum value of exchange rates determined with respect to the respective test modules is registered.

Further, the memory device 62 stores a resource management table that manages an amount of resources used by each individual function module 130 for each individual function module 130 which becomes a resource management subject. In a case in which the individual function module 130 becomes the resource management subject, the resource management table is created in accordance with the drive of the corresponding individual function module 130.

Fig. 8 is a diagram illustrating a data structure of a resource management table 460.

As shown in Fig. 8, in the resource management table 460, one record is registered for each resource type. Each record includes a field 462 in which a resource name is registered, a field 464 in which an upper limit value of resources used by the individual function module 130 at the network printer is registered, a field 466 in which an amount of resources currently used by the individual function module 130 at the host terminal 100 is registered, and a field 468 in which a value obtained by exchanging a value of the field 466 with the amount of resources used at the network printer is registered.

In Fig. 8, in a first-stage record, 'memory' is registered as a resource name, '1,000,000' is registered as an upper limit value, '200,000', '100,000', and '150,000' are respectively registered as current values for memory use forms A, B and C, and '650,000' is registered as an exchanged value. It means that an upper limit value of a memory capacity used by the individual function module 130 at the network printer is 1,000,000 [bytes], and currently used memory capacities are respectively 200,000 [bytes], 100,000 [bytes], and 150,000 [bytes] in the use forms A, B, and C. Further, it means that a value exchanged with the memory capacity used at the network printer (hereinafter, referred to as exchanged memory capacity) is 650,000 [bytes]. The exchanged memory capacity can be calculated as 200,000 × 1 + 100,000 × 1.5 + 150,000 × 2 = 650,000 with reference to the resource exchange table 22 of Fig. 7.

Further, in a second-stage record, 'the number of classes' is registered as a resource name, '100' is registered as an upper limit value, '20' is registered as a current value, and '20' is registered as an exchanged value. It means that an upper limit value of the number of classes driven by the individual function module 130 at the network printer, and the individual function module 130 is currently driving twenty classes. Further, it means that a value exchanged with the number of classes driven at the network printer (hereinafter, referred to as the number of exchanged classes) is twenty. The number of exchanged classes can be calculated as 20 × 1 = 20 with reference to the resource exchange table 22 of Fig. 7.

Further, the memory device 62 stores an event listener table 480 that registers an event listener for processing an event received by the individual function module 130.

Fig. 9 is a diagram illustrating a data structure of the event listener table 480.

As shown in Fig. 9, in the event listener table 480, each record is registered for each event listener which the individual function module 130 registers. Each record includes a field 482 in which a name of an event listener is registered.

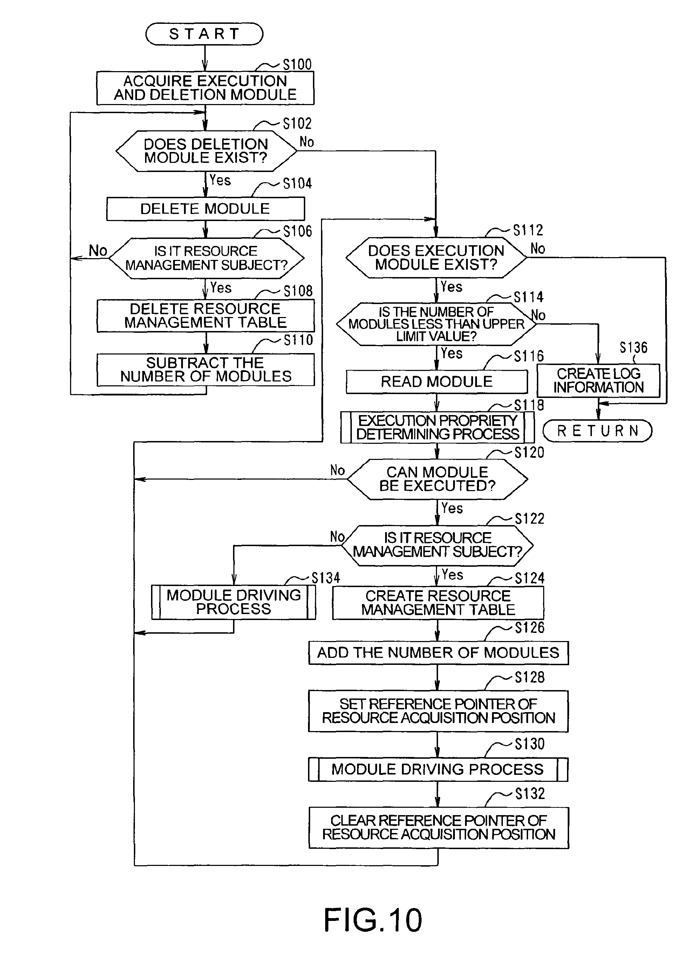

Referring back to Fig. 3, the CPU 50 is composed of a microprocessor unit or the like. The CPU 50 drives a predetermined program stored in a predetermined region of the ROM 52, and performs in a time division manner an individual function module controlling process, a class reading process, an event listener controlling process, an instance deleting process, and a module authenticating process illustrated in the flowcharts of Figs. 10, 14, 15, 17 and 18, respectively, as processes of the common function module 120 so as to be executed in accordance with the program.

First, the individual function module controlling process will be described.

Fig. 10 is a flowchart illustrating the individual function module controlling process.

The individual function module controlling process is a process that controls the deletion and execution of the individual function module 130. If the CPU 50 executes the individual function module controlling process, first, the process proceeds to step S100, as shown in Fig. 10.

In step S100, a name of an individual function module 130 to be executed and a name of an individual function module 130 to be deleted are acquired from the execution environment information registration table 440, and the process proceeds to step S102. In step S102, it is determined whether or not the individual function module 130 to be deleted exists. In this case, when it is determined that the individual function module 130 to be deleted exists (Yes), the process proceeds to step S104.

In step S104, the corresponding individual function module 130 is deleted from the memory device 62 on the basis of the acquired name, and the process proceeds to step S106. In step S106, it is determined whether or not the corresponding individual function module 130 is a resource management subject on the basis of the module information 420 included in the corresponding individual function module 130. In this case, when it is determined that the corresponding individual function module 130 is the resource management subject (Yes), the process proceeds to step S108.

In step S108, the resource management table 460 corresponding to the corresponding individual function module 130 is deleted from the memory device 62, and the process proceeds to step S110. In step S110, '1' is subtracted from a value of a variable indicating the number of modules which are currently driven, and the process proceeds to step S102.

On the other hand, when it is determined that the corresponding individual function module 130 is not the resource management subject (No) in step S106, the process proceeds to step S102.

In step S102, when it is determined that the individual function module 130 to be deleted does not exist (No), and the process proceeds to step S112. In step S112, it is determined whether the individual function module 130 to be executed exists or not, and when it is determined that the individual function module 130 to be executed exists (Yes), the process proceeds to step S114.

In step S114, it is determined whether a value of a variable indicating the number of modules which are currently driving is less than a predetermined upper limit value, and when it is determined that the value of the variable indicating the number of modules which are currently driving is less than the predetermined upper limit value (Yes), the process proceeds to step S116.

In step S116, the corresponding individual function module 130 is read from the memory device 62 on the basis of the acquired name, and the process proceeds to step S118. In step S118, executed is an execution propriety determination process determining whether or not the read individual function module 130 can be executed, and the process proceeds to step S120.

In step S120, it is determined whether or not a returning value indicating that the execution of the individual function module 130 is allowed from the execution propriety determination process is returned. When it is determined that the returning value indicating that the execution of the individual function module 130 is allowed from the execution propriety determination process (Yes) is returned, the process proceeds to step S122.

In step S122, it is determined whether the corresponding individual function module 130 is a resource management subject on the basis of the module information 420 included in the corresponding individual function module 130. In this case, when it is determined that the corresponding individual function module 130 is the resource management subject (Yes), the process proceeds to step S124.

In step S124, the resource management table 460 corresponding to the corresponding individual function module 130 is created, an upper limit value is acquired from the resource restriction information 400 included in the corresponding individual function module 130, and the acquired upper limit value is registered in the created resource management table 460. Then, the process proceeds to step S126, and '1' is added to a value of a variable indicating the number of modules which are currently driving. Then, the process proceeds to step S128.

In step S128, an address of the created resource management table 460 is set to a reference pointer of a resource acquisition position, and the process proceeds to step S130. In step S130, executed is a module driving process for driving the corresponding individual function module 130, and the process proceeds to step S132. In step S132, the reference pointer of the resource acquisition position is cleared, and the process proceeds to step S112.

On the other hand, in step S122, when it is determined that the corresponding individual function module 130 is not the resource management subject (No), the process proceeds to step S134. In step S134, the same module driving process as step S130 is executed, and the process proceeds to step S112.

On the other hand, in step S120, if it is determined that the returning value indicating that the execution of the individual function module 130 is not allowed from the execution propriety determination process (No) is returned, the process proceeds to step S112.

In step S114, when it is determined that a value of a variable indicating the number of modules which are currently driving is not less than a predetermined upper limit value (No), the process proceeds to step S136. In step S136, log information indicating that the number of modules has reached the upper limit value is created, and the created log information is written in a log file of the memory device 62. Then, a series of processes are completed, and the process returns to the original process.

On the other hand, in step S112, when it is determined that the individual function module 130 to be executed does not exist (No), a series of processes are completed, and the process returns to the original process.

Next, the execution propriety determination process of step S118 will be described.

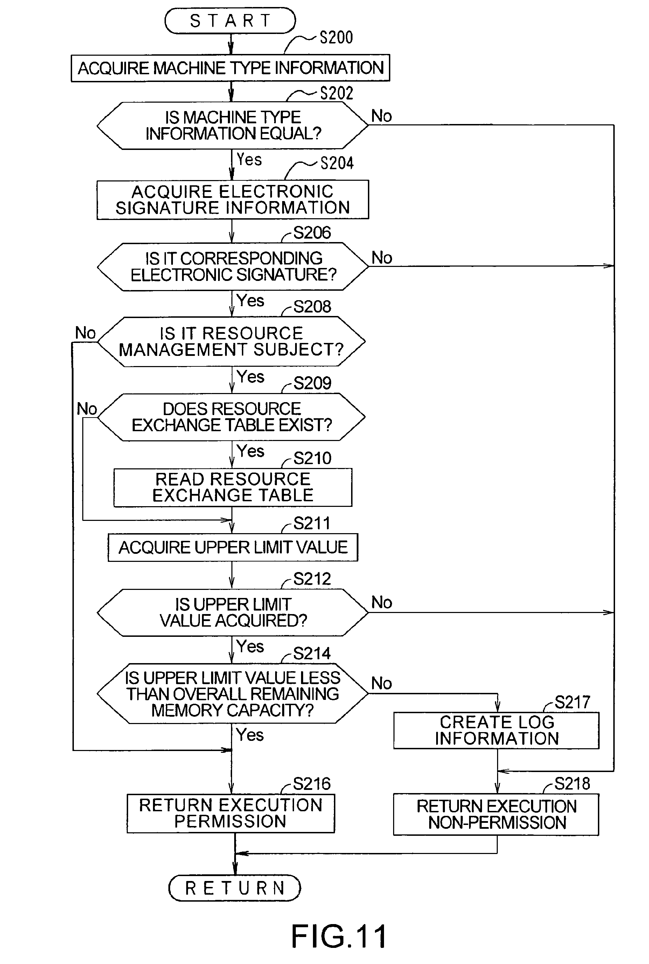

Fig. 11 is a flowchart illustrating the execution propriety determination process.

If the execution propriety determination process is executed in step S118, first, the process proceeds to step S200, as shown in Fig. 11.

In step S200, machine type information is acquired from the module information 420 included in the individual function module 130, and the process proceeds to step S202. In step S202, it is determined whether the acquired machine type information is equal to a machine type information of the execution environment information registration table 440 or not, and when it is determined that the acquired machine type information is equal to the machine type information of the execution environment information registration table 440 (Yes), the process proceeds to step S204.

In step S204, electronic signature information is acquired from the module information 420 included in the individual function module 130, and the process proceeds to step S206. In step S206, it is determined whether the acquired electronic signature information can correspond to the information of the execution environment information registration table 440 on the basis of the execution environment information registration table 440. In this case, when it is determined that the acquired electronic signature information can correspond to the information of the execution environment information registration table 440 (Yes), the process proceeds to step S208.

In step S208, it is determined whether the individual function module 130 is the resource management subject on the basis of the module information 420 included in the individual function module 130, and when it is determined whether the individual function module 130 is the resource management subject (Yes), the process proceeds to step S209.

In step S209, it is determined whether or not the resource exchange table 22 corresponding to the execution environment information registration table 440 exists, and when it is determined that the resource exchange table 22 corresponding to the execution environment information registration table 440 exists (Yes), the process proceeds to step S210. In step S210, the corresponding resource exchange table 22 is read form the memory device 62, and the process proceeds to step S211.

In step S211, an upper limit value is acquired from the resource restriction information 400 included in the individual function module 130, and the process proceeds to step S212. In step S212, it is determined whether or not the upper limit value is acquired, and when it is determined that the upper limit value is acquired (Yes), the process proceeds to step S214.

In step S214, it is determined whether or not the acquired upper limit value is less than the overall remaining memory capacity, and when it is determined that the acquired upper limit value is less than the overall remaining memory capacity (Yes), the process proceeds to step S216. In step S216, a returning value indicating that the execution of the individual function module 130 is allowed is returned, a series of processes are completed, and the process returns to the original process.

On the other hand, in step S214, when it is determined that the acquired upper limit value is not less than the overall remaining memory capacity (No), the process proceeds to step S217. In step S217, log information indicating that the upper limit value is not less than the overall remaining memory capacity is created, the created log information is written in the a log file of the memory device 62, and the process proceeds to step S218. In step S218, returned is a returning value indicating that the execution of the individual function module 130 is not allowed, a series of processes are completed, and the process returns to the original process.

On the other hand, when it is determined that the upper limit value is not acquired (No) in step S212, or when it is determined the acquired electronic signature information cannot correspond to the information of the execution environment information registration table 440 (No) in step S206, or when it is determined whether the acquired machine type information is not equal to the machine type information of the execution environment information registration table 440 (No) in step S202, the process proceeds to step S218.

In step S209, when it is determined that there is not a resource exchange table 22 corresponding to the execution environment information registration table 440 (No), the process proceeds to step S211.

In step S208, when it is determined that the individual function module 130 is not the resource management subject (No), the process proceeds to step S216.

Next, the module driving process in steps S130 and S134 will be described.

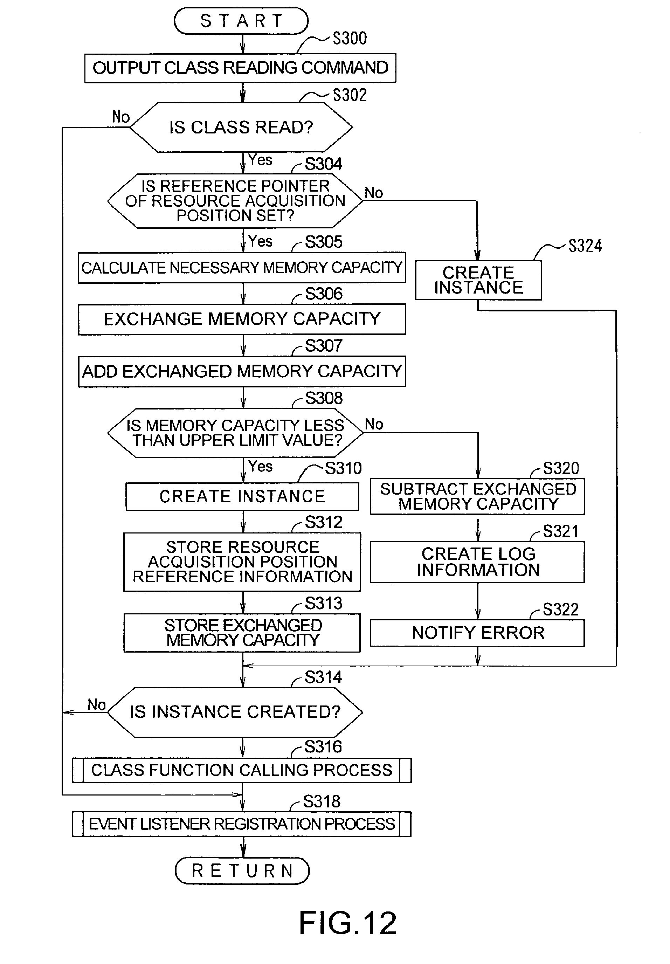

Fig. 12 is a flowchart illustrating a module driving process.

If the module driving process is executed in steps S130 and S134, first, the process proceeds to step S300, as shown in Fig. 12.

In step S300, a class reading command for making the class read is output from the individual function module 130, and the process proceeds to step S302. In step S302, it is determined whether the class is read or not, and when it is determined that the class is read (Yes), the process proceeds to step S304.

In step S304, it is determined whether a reference pointer of the resource acquisition position is set or not, and when it is determined that a reference pointer of the resource acquisition position is set (Yes), the process proceeds to step S305. In step S305, a memory capacity necessary for executing the read class is calculated, and the process proceeds to step S306.

In step S306, the memory use form is specified from the library used by the read class, the exchange rate corresponding to the specified memory use form is acquired from the read resource exchange table 22, and the calculated memory capacity is multiplied by the acquired exchange rate so as to be exchanged with the memory capacity used at the network printer.

Next, the process proceeds to step S307, and the exchanged memory capacity is added to the use memory capacity of the resource management table 460 (hereinafter, referred to as reference resource management table 460) which the reference pointer of the resource acquisition position indicates. Next, the process proceeds to step S308, and it is determined whether a total memory capacity of the exchanged memory capacity and the use memory capacity of the reference resource management table 460 is less than the upper limit value of the reference resource management table 460. When it is determined that the total memory capacity of the exchange memory capacity and the use memory capacity of the resource management table 460 is less than the upper limit value of the reference resource management table 460 (Yes), the process proceeds to step S310.

In step S310, an instance of the read class is created on the memory, and the process proceeds to step S312. In step S312, the resource acquisition position reference information indicating a value of the reference pointer of the resource acquisition point is stored in the created instance, and the process proceeds to step S313. In step S313, the exchanged memory capacity is stored in the created instance, and the process proceeds to step S314.

In step S314, it is determined whether or not the instance is created, and when it is determined that the instance is created (Yes), the process proceeds to step S316. In step S316, executed is a class function calling process that calls the read class function, and the process proceeds to step S318. In step S318, executed is an event listener registration process that registers the event listener of the individual function module 130, a series of processes are completed, and the process returns to the original process.

On the other hand, in step S308, when it is determined that the total memory capacity is not less than the upper limit value (No), the process proceeds to step S320. In step S320, the exchanged memory capacity is subtracted from the use memory capacity of the reference resource management table 460, and the process proceeds to step S321.

In step S321, the log information indicating that the memory capacity used by the individual function module 130 reaches the upper limit value is created, the created log information is written in the log file of the memory device 62, and the process proceeds to step S322. In step S322, an error is notified, and the process proceeds to step S314.

On the other hand, in step S304, when it is determined that the reference pointer of the resource acquisition position is not set (No), the process proceeds to step S324. In step S324, the instance of the read class is created on the memory, and the process proceeds to step S314.

When it is determined that the instance is not created (No) in step S314 or when it is determined that the class is not read (No) in step S302, the process proceeds to step S318.

Next, the event listener registration process of step S318 will be described.

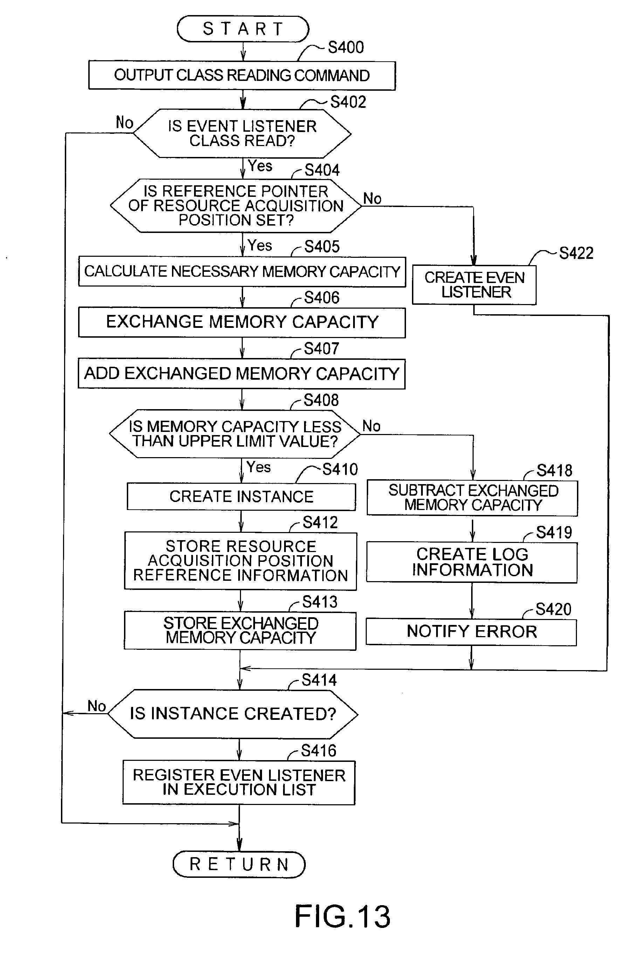

Fig. 13 is a flowchart illustrating the event listener registration process.

If the event listener registration process is executed in step S318, first, the process proceeds to step S400, as shown in Fig. 13.

In step S400, a class reading command for making the event listener class read is output from the individual function module 130, and the process proceeds to step S402. In step S402, it is determined whether or not the event listener class is read, and when it is determined that the event listener class is read (Yes), the process proceeds to step S404.

In step S404, it is determined whether or not a reference pointer of the resource acquisition position is set, and when it is determined that the reference pointer of the resource acquisition position is set (Yes), the process proceeds to step S405. In step S405, a memory capacity necessary for executing the read event listener class is calculated, and the process proceeds to step S406.

In step S406, the memory use form is specified from the library used by the read event listener class, the exchange rate corresponding to the specified memory use form is acquired from the read resource exchange table 22, and the calculated memory capacity is multiplied by the acquired exchange rate so as to exchange with the memory capacity used at the network printer.

Next, the process proceeds to step S407, and the exchange memory capacity is added to the use memory capacity of the reference resource management table 460. Next, the process proceeds to step S408, and in step S408, it is determined that the total memory capacity of the exchange memory capacity and the use memory capacity of the reference resource management table 460 is less than the upper limit value of the reference resource management table 460 (Yes), the process proceeds to step S410.

In step S410, an instance of the read event listener class is created on the memory, and the process proceeds to step S412. In step S412, the resource acquisition position reference information indicating a value of the reference pointer of the resource acquisition position is stored in the created instance, and the process proceeds to step S413. In step S413, the exchanged memory capacity is stored in the created instance, and the process proceeds to step S414.

In step S414, it is determined whether the instance is created or not, and when it is determined that the instance is created (Yes), the process proceeds to step S416. In step S416, the event listener of the created instance is registered in the event listener execution list, a series of processes are completed, and the process returns to the original process.

On the other hand, in step S408, when it is determined that the total memory capacity is not less than the upper limit value (No), the process proceeds to step S418. In step S418, the exchanged memory capacity is subtracted from the use memory capacity of the reference resource management table 460, and the process proceeds to step S419.

In step S419, the log information indicating that the memory capacity used by the individual function module 130 reaches the upper limit value is created, the created log information is written in the log file of the memory device 62, and the process proceeds to step S420. In step S420, an error is notified, and the process proceeds to step S414.

In step S404, when it is determined that the reference pointer of the resource acquisition position is not set (No), the process proceeds to step S422. In step S422, the instance of the read event listener class is created on the memory, and the process proceeds to step S414.

When it is determined that the instance is not created (No) in step S414 or when it is determined that the event listener class is not read (No) in step S402, a series of processes are completed, and the process returns to the original process.

Next, a class reading process will be described.

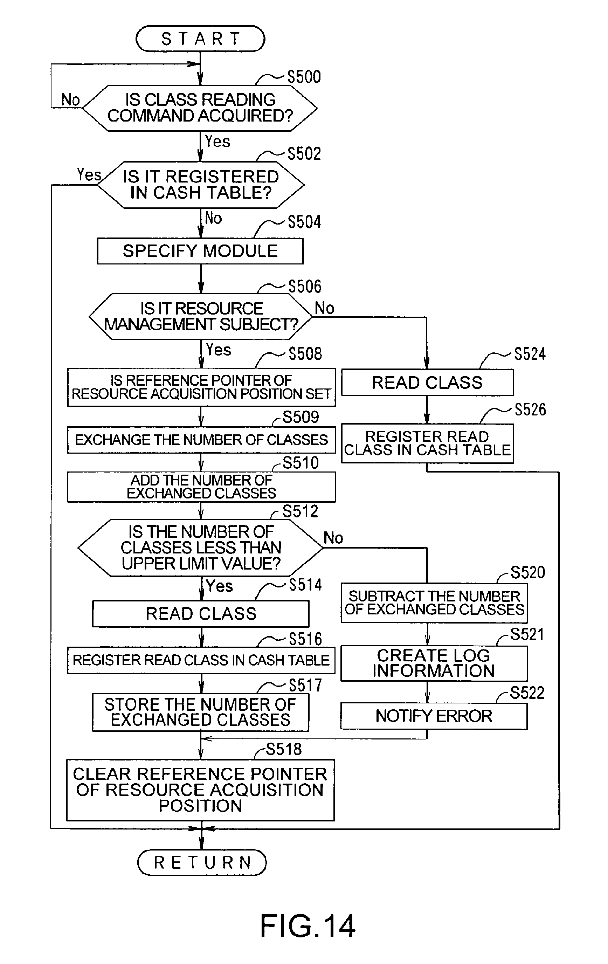

Fig. 14 is a flowchart illustrating the class reading process.

The class reading process is a process which reads the class corresponding to a class reading command. As shown in Fig. 14, if the class reading process is executed by the CPU 50, the process proceeds to step S500.

In step S500, it is determined whether or not the class reading command is acquired. When the class reading command is acquired (Yes), the process proceeds to step S502. Otherwise (No), the process waits in step S500 until the class reading command is acquired.

In step S502, it is determined whether or not a class related to the class reading command is registered in a cache table. If it is determined that the class is not registered in the cache table (No), the process proceeds to step S504.

In step S504, a corresponding individual function module 130, which includes a class related to the class reading command, is specified, and the process proceeds to step S506. In step S506, the corresponding individual function module 130 is determined whether or not the corresponding individual function module 130 is a resource managing object on the basis of module information 420 included in the corresponding individual function module 130. If the corresponding individual function module 130 is the resource managing object (Yes), the process proceeds to step S508.

In step S508, an address of a resource managing table 460 corresponding to the individual function module 130 is set as a reference pointer of a resource securing destination, and the process proceeds to step S509.

In step S509, an exchange rate corresponding to the number of class is read or acquired from a resource exchange table 22, and multiplied by the number of class '1' related to the class reading command so as to exchange to the number of class being derived in a network printer.

Accordingly, the process proceeds to step S510, and the exchanged number of the class is added to the number of deriving class of a reference resource managing table 460. The process proceeds to step S512, and it is determined whether or not the number of class of the added summation is less than upper limit value of the reference resource managing table 460. If it is determined that the number of class of the added summation is less than the upper limit value of the reference resource managing table 460 (Yes), the process proceeds to step S514.

In step S514, the class related to the class reading command is read from the individual function module 130 and the process proceeds to step S516. The read class is registered in the cache table, and the process proceeds to step S517.

In step S517, the number of exchanged classes is stored in the read class, the process proceeds to step S518, and the reference pointer of the resource securing destination is cleared. And then, a series of processes are terminated and the process returns to the original process.

On the other hand, in step S512, in the case when the number of class of the summation is more than the upper limit value (No), the process proceeds to step S520, the exchanged number of the class is subtracted from the number of deriving classes of the reference resource managing table 460, and then the process proceeds to step S521.

In step S521, log information, which indicates that the number of classes derived by the individual function module 130 reaches the upper limit, is created and recorded in a log file of a memory device 62, the process proceeds to step S522, error is notified, and the process proceeds to step S518.

In step S506, in the case that the corresponding individual function module 130 is not the resource managing object (No), the process proceeds to step S524, the class related to the class reading command is read from the individual function module 130, the process proceeds to step S526, the read class is registered in the cache table, and the series of processes are terminated and the process returns to the original process.

In step S502, in the case when the class related to the class reading command is registered in the cache table (Yes), the series of processes are terminated and the process returns to the original process.

Next, an event listener controlling process will be described.

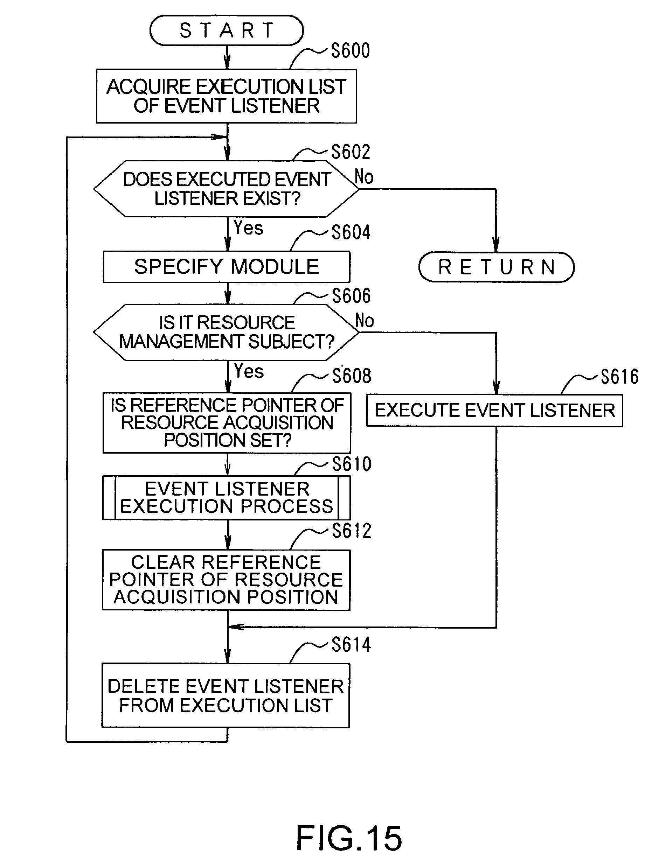

Fig. 15 is a flowchart illustrating an event listener controlling process.

The event listener controlling process is a process of controlling the execution of the event listener. If the event listener controlling process is executed by the CPU 50, the process proceeds to step S600 as shown in Fig. 15.

In step S600, an event listener execution list is acquired, the process proceeds to step S602. It is determined whether or not an event listener to be executed exists on the basis of the acquired event listener. In the case that the event listener to be executed exists (Yes), the process proceeds to step S604.

In step S604, the individual function module 130 which is a creating destination of the corresponding event listener is specified, the process proceeds to step S606, it is determined whether or not the corresponding individual function module 130 is a resource managing object on the basis of the module information 420 included in the specified corresponding individual function module 130. In the case that the corresponding individual function module 130 is the resource managing object (Yes), the process proceeds to step S608.

In step S608, an address of a resource managing table 460 corresponding to the corresponding individual function module 130 is set as the reference pointer of the resource securing destination, the process proceeds to step S610, a corresponding event listener executing process is executed, the process proceeds to step S612, the reference pointer of the resource securing destination is cleared, and the process proceeds to step S614.

In step S614, the corresponding event listener is deleted from the event listener execution list and the process proceeds to step S602.

On the contrary, in step S606, in the case that the corresponding individual function module 130 is not the resource managing object (No), the process proceeds to step S616, corresponding event listener is executed, and the process proceeds to step S614.

Meanwhile, in step S602, in the case that the event listener to be executed does not exist (No), the series of processes are terminated and the process returns to the original process.

Next, the event listener executing process in step S610 is described.

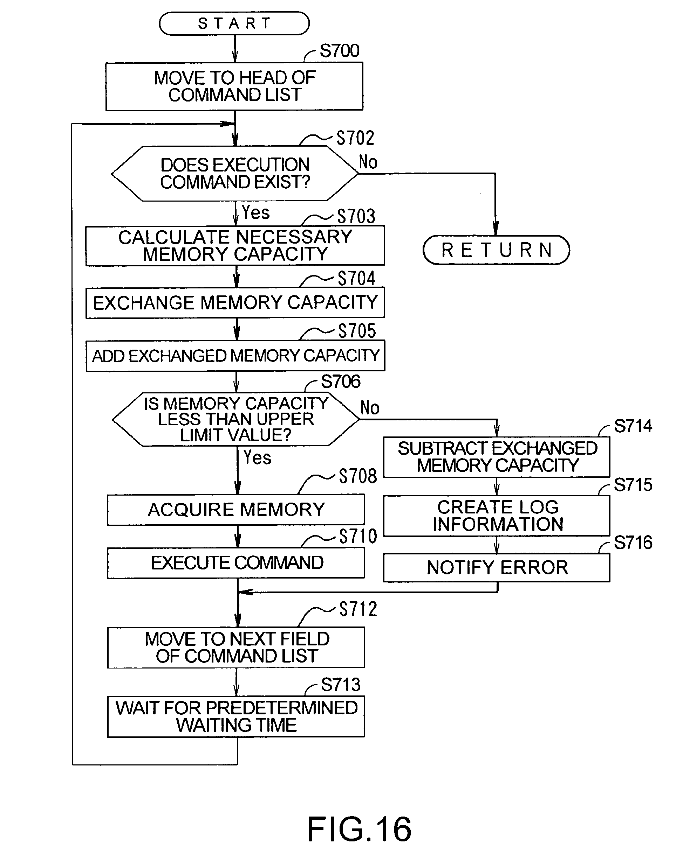

Fig. 16 is a flowchart illustrating the event listener executing process.

If the event listener executing process is executed in step S610, the process first proceeds to step S700 as shown in Fig. 16.

In step S700, a program pointer is moved to the head of the command list included in the event listener, the process proceeds to step S702, it is determined whether or not a command to be executed exists in an address indicated by the program pointer. In the case that the command to be executed exists in the corresponding address (Yes), the process proceeds to step S703, memory capacity needed for executing the command is calculated, and the process proceeds to step S704.

In step S704, a memory using form is specified from a library used for executing the command, an exchange rate corresponding to the memory using form of the specified memory is acquired from the read resource exchange table 22, and the memory capacity being used in a network printer is exchanged by multiplying the acquired exchange rate to the calculated memory capacity.

Next, the process proceeds to step S705, the exchanged memory capacity is added to the used memory capacity of the reference resource managing table 460, the process proceeds to step S706, and it is determined whether or not the memory capacity of the added summation is less than the upper limit value of the reference resource managing table 460. In the case that the memory capacity of the added summation is less than the upper limit value (Yes), the process proceeds to step S708.

In step S708, the memory is secured, the process proceeds to step S710, the command of the address indicated by the program pointer is executed, the process proceeds to step S712, the program pointer shifts to the next command list included in the event listener, the process proceeds to step S713, the process waits for a predetermined waiting time, and the process proceeds to step S702.

Meanwhile, in step S706, in the case that the memory capacity of the summation is more than the upper limit value (No), the process proceeds to step S714, the exchanged memory capacity is subtracted from the used memory capacity of the reference resource managing table 460, and the process proceeds to step S715.

In step S715, log information, which displays that the memory capacity used by the individual function module 130 reaches the upper limit, is created and recorded in a log file of a memory device 62, the process proceeds to step S716, error is informed, and the process proceeds to step S712.

Meanwhile, in step S702, in the case that the command to be executed does not exist (No), the series of processes are terminated and the process returns to the original process.

Next, an instance deleting process will be described.

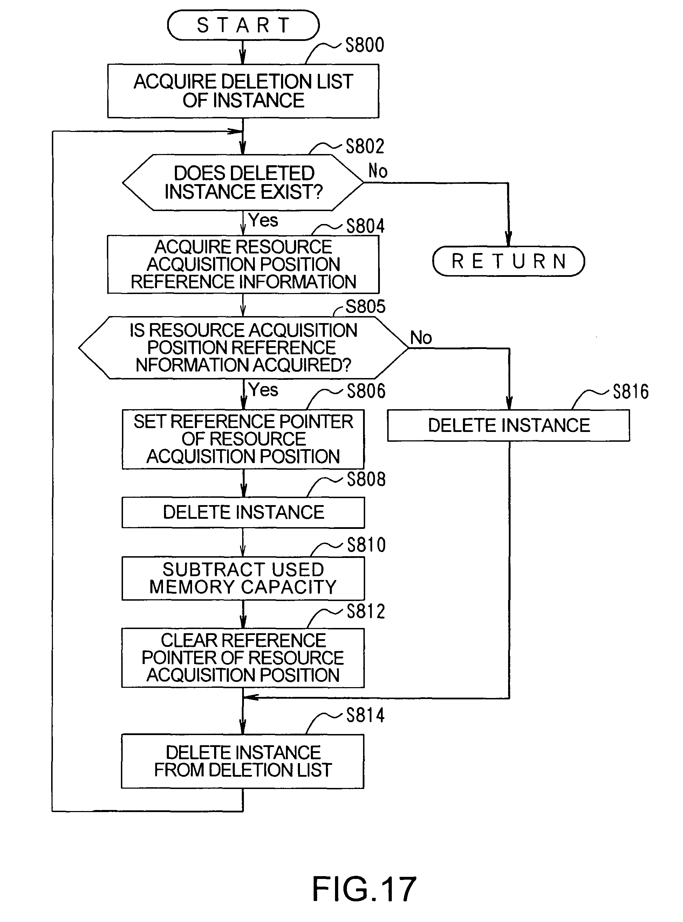

Fig. 17 is a flowchart illustrating the instance deleting process.

The instance deleting process is a process of deleting the instance, and if the instance deleting process is executed by the CPU 50, the process proceeds to step S800, as shown in Fig. 17.

In step S800, an instance deleting list in which the instance to be deleted is registered is acquired, the process proceeds to step S802, and it is determined whether or not the instance to be deleted exists on the basis of the acquired instance deleting list. In the case that the instance to be deleted exists (Yes), the process proceeds to step S804.

In step S804, reference information of the resource securing destination is acquired from the corresponding instance, the process proceeds to step S805. In step S805, it is determined whether or not the reference information of the resource securing destination is acquired. In case that the reference information of the resource securing destination is acquired (Yes), the process proceeds to step S806.

In step S806, the reference pointer of the resource securing destination is set on the basis of the acquired reference information of the resource securing destination, the process proceeds to step S808, the corresponding instance is deleted, the process proceeds to step S810, the memory capacity needed for executing the corresponding instance is subtracted from the used memory capacity of the reference resource managing table 460, and the process proceeds to step S812.

In step S812, the reference pointer of the resource securing destination is cleared, the process proceeds to step S814, the corresponding instance is deleted from the instance deleting list, and the process proceeds to step S802.

Meanwhile, in step S805, in the case that the reference information of the resource securing destination is not acquired (No), the process proceeds to step S816, the corresponding instance is deleted, and the process proceeds to step S814.

Meanwhile, in step S802, in the case that the instance to be deleted does not exist (No), the series of processes are terminated and the process returns to the original process.

Next, a module certifying process will be described.

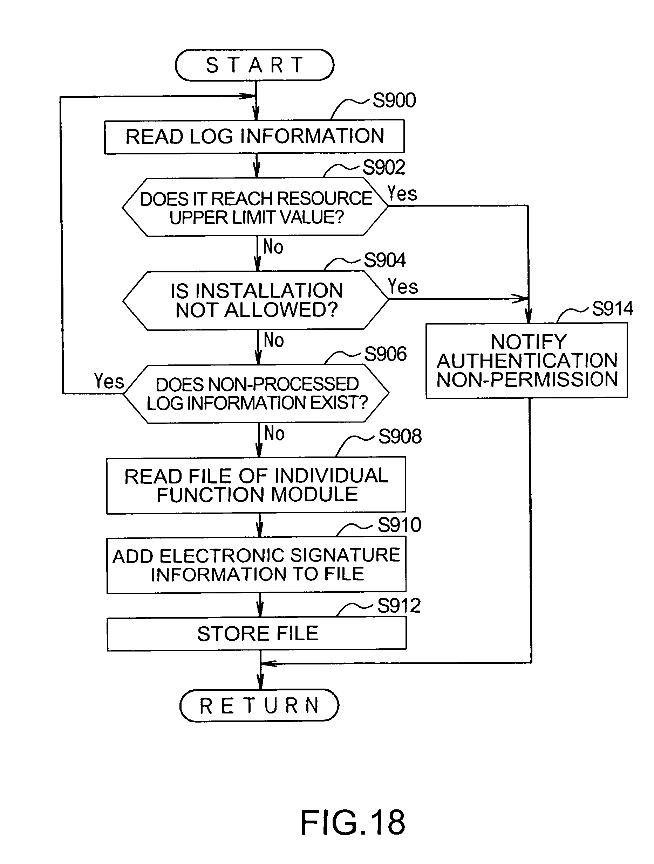

Fig. 18 is a flowchart illustrating the module certifying process.

If the module certifying process is executed by the CPU 50, the process first proceeds to step S900 as shown in Fig. 18.

In step S900, the log information is read from the log file of the memory device 62, the process proceeds to step S902, and it is determined whether or not the number of deriving classes of the individual function module 130 or the used memory capacity reaches the upper limit on the basis of the read log information. In the case that the number of deriving classes of the individual function module 130 or the used memory capacity does not reach the upper limit (No), the process proceeds to step S904.

In step S904, it is determined whether or not the individual function module 130 can not be installed on the network printer on the basis of the read log information. In the case that the individual function module 130 can be installed on the network printer (No), the process proceeds to step S906.

In step S906, it is determined whether or not non-processed log information exists in the log file of the memory device 62. In the case that the non-processed log information does not exist in the log file of the memory device 62 (No), the process proceeds to step S908, an execution file of the individual function module 130 is read from the memory device 62 and the process proceeds to step S910.

In step S910, electronic signature information is added to the read execution file, the process proceeds to step S912 and stores the execution file, in which the electronic signature information is added, in the memory device 62, and the series of processes are terminated and the process returns to the original process.

Meanwhile, in step S906, in the case when non-processed log information exists (Yes), the process proceeds to step S900.

Meanwhile, when the individual function module 130 can not be installed on the network printer (Yes) in step S904 and when the number of deriving classes or the used memory capacity reaches the upper limit (Yes) in step S902, the process proceeds to step S914, a message, which displays that the individual function module 130 can not be certified, is displayed in the display device 64, and the series of processes are terminated and the process returns to the original process.

Next, an operation according to an aspect of the invention will be described.

At first, a case of executing the individual function module 130 to be the resource managing object will be described.

In the host terminal 100, an individual function module controlling process is performed by executing the common function module 120. In the individual function module controlling process, if the individual function module 130 to be deleted exists, the corresponding individual function module 130 is deleted through steps S102 to S110. Next, through step S114, if existing number of the currently deriving module is less than the predetermined upper limit value, the corresponding individual function module 130 is read and it is determined whether or not the read individual function module 130 can be executed through steps S116 and S118. In the execution propriety determining process, the individual function module 130 can be executed when the individual function module 130 includes information on identified kind and corresponding electronic signature information, and the upper limit value of usable memory capacity is less than the remained memory capacity.

If the individual function module 130 is permitted to be executed, the resource managing table 460 is created, '1' is added to the number of currently deriving modules, and the individual function module 130 is derived through steps S124 to S128. In the module deriving process, through steps S509 and S510, S305 to S307, the number of deriving classes and the used memory capacity of the individual function module 130 are exchanged and added to the number of deriving classes and the used memory capacity on the network printer. At this time, if any one of the number of deriving classes or the used memory capacity is more than the upper limit value, while the log information, which indicates that the number of deriving classes or the used memory capacity of the individual function module 130 reaches the upper limit value, is created, the error is notified in order to stop reading the class and creating the instance through steps S521, S522, S321, and S322.

Further, in the case that any one of the number of deriving classes or the used memory capacity is less than the upper limit value, through steps S514, S310, and S318, the class of the individual function module 130 is read, the instance of the read class is created, and the event listener of the individual function module 130 is registered. In the event listener registering process, through steps S509, S510, and S405 to S407, the number of deriving classes and the used memory capacity of the individual function module 130 are exchanged and added to the number of deriving classes and the used memory capacity on the network printer. At this time, if any one of the number of deriving classes or the used memory capacity is equal to or more than the upper limit value, while the log information which indicates that the number of deriving classes or the used memory capacity of the individual function module 130 reaches the upper limit value, the error is notified in order to stop reading the event listener and creating the instance through steps S521, S522, S419, or S420.

Furthermore, in the case that any one of the number of deriving classes or the used memory capacity is less than the upper limit value, through steps S514, S410, and S416, the event listener is read, an instance in an event listener class is created and the event listener of the created instance is registered in an event listener execution list.

Meanwhile, in the host terminal 100, the event listener controlling process is executed by executing the common function module 120. In the event listener controlling process, through steps S703 to S705, the used memory capacity of the individual function module 130, which is the creating destination of the event listener to be executed, is exchanged and added to the used memory capacity in the network printer. At this time, if the used memory capacity is equal to or more than the upper limit value, through steps S715 and S716, while the log information, which indicates that the memory capacity used by the individual function module 130 reaches the upper limit value, is created, the error is informed in order to stop the execution of the event listener.

Further, in the case that the used memory capacity is less than the upper limit value, through step S710, a command included in the event listener is executed.

Meanwhile, in the host terminal 100, the instance deleting process is executed by executing the common function module 120. In the instance deleting process, in the case that the instance to be deleted exists, through steps S808 and S810, the corresponding instance is deleted and the used memory capacity of the individual function module 130, which is the creating destination of the event listener, is subtracted.

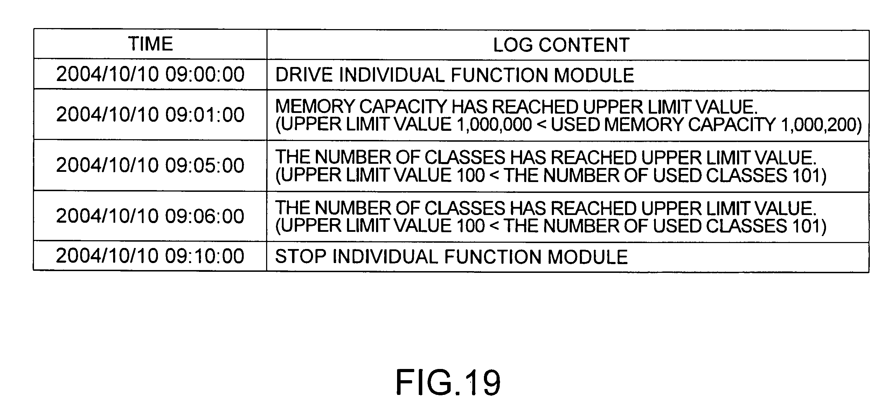

Fig. 19 is a view illustrating the contents of the log information when the error is created.

When the error occurs, as shown in Fig. 19, the log information which indicates that the number of deriving class or the used memory capacity of the individual function module 130 reaches the upper limit value as well as the log information which indicates that the individual function module 130 is derived or stopped, are recorded in the log file.

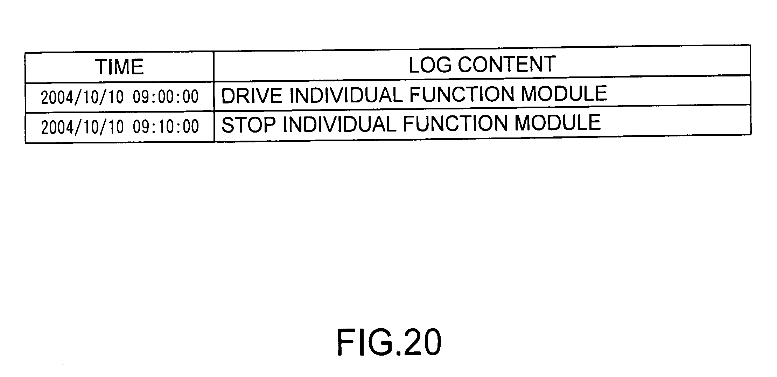

The Fig. 20 is a view illustrating the contents of the log file when the error does not occur.

Further, in the case that the error does not occur, the log information, which indicates that the individual function module 130 is derived or stopped, is recorded in the log file, as shown in Fig. 20.

Next, a case of executing the individual function module 130 which is not the resource managing object will be described.

In the host terminal 100, if the individual function module controlling process is executed, through steps S116 and S118, the corresponding individual function module 130 is read, and it is determined whether or not the read individual function module 130 can be executed.

If the individual function module 130 is permitted to be executed, through step S134, the individual function module 130 is derived. In the module deriving process, through steps S524, S324, and S318, the class of the individual function module 130 is read, the instance of the read class is created, and the event listener of the individual function module 130 is registered. In the event listener registering process, through steps S524, S422, and S416, the event listener is read, the instance of the event listener is created, and the event listener of the created instance is registered in the event listener execution list.

Meanwhile, in the host terminal 100, if the event listener controlling process is executed, through step S616, a command included in the event listener to be executed is executed.

Meanwhile, in the host terminal 100, if the instance deleting process is executed and the instance to be deleted exists, through step S816, the corresponding instance is deleted.

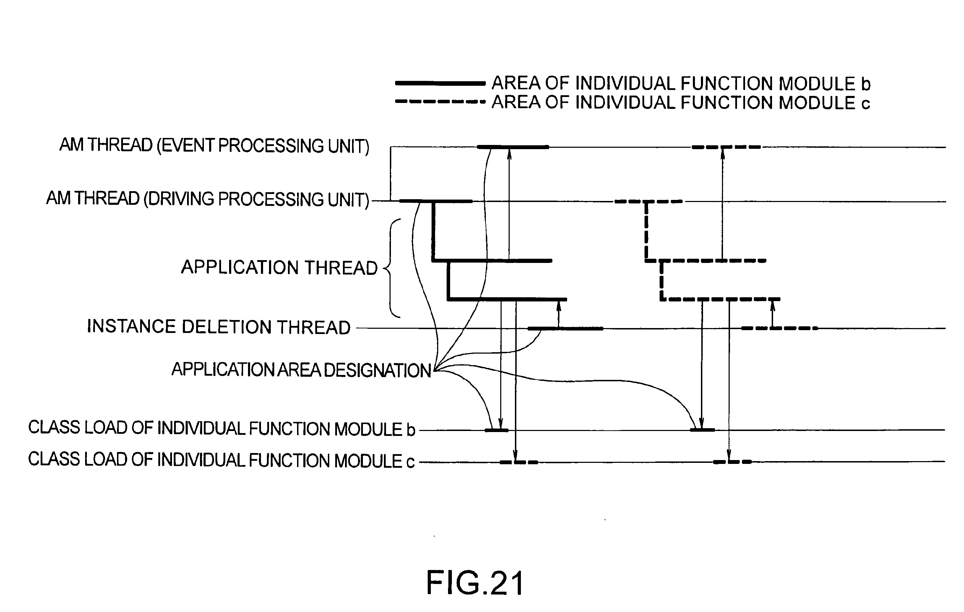

Fig. 21 is a time chart illustrating the case of executing individual function modules b and c, which are the resource managing objects, in parallel.

In Fig. 21, a solid line represents thread of the individual function module b and something which is used to executed the individual function module b among threads of the common function module 120. Also, a dashed line represents the thread of the individual function module c and something which is used to executed the individual function module c among threads of the common function module 120.

If the individual function module b is executed, an AM thread (deriving processor) of the common function module 120 is executed and the individual function module b is derived so as to execute the thread. Further, the AM thread of the common function module 120 is executed and the event listener of the individual function module b is created. If an event corresponding to the individual function module b is created, the AM thread (event processor) of the common function module 120 is executed, the class of the individual function module b is read, and the read instance is created. In the case that the individual function module b is not required, an instance deleting thread of the common function module 120 is executed and the instance of the individual function module b is deleted. In these series of processes, the number of deriving classes and the used memory capacity, which are increased or decreased according to the execution of the thread of the common function module 120 and the individual function module b, are managed as resource capacity used by the individual function module b and restricted to be less than the predetermined upper limit value set by the individual function module b.

The above operation is the same in the individual function module c. However, in these series of processes, the number of driving classes and the used memory capacity, which are increased or decreased according to the execution of the thread of the common function module 120 and the individual function module c, are managed as resource capacity used by the individual function module c and restricted to be less than the predetermined upper limit value set by the individual function module c.

Next, a case of certifying the individual function module 130 will be described.

In the host terminal 100, if the log file is created, though steps S900 to S906, repeatedly, the log information is read sequentially from the log file, and it is determined whether or not the number of driving classes or the used memory capacity of the individual function module 130 reaches the upper limit value, and whether or not the individual function module 130 can be installed in the network printer. As the log file shown in Fig. 20, if all log information included in the log file is determined that the number of driving classes or the used memory capacity does not reach the upper limit value and may be installed in the network printer, through steps S908 to S912, the execution file of the individual function module 130 is read, and the electronic signature information is added and stored in the read execution file.

Further, as the log file shown in Fig. 19, if any one of the log information included in the log file is determined that the number of driving classes or the used memory capacity reaches the upper limit value and may not be installed in the network printer, through step S914, a message which displays that the log file may not be certified is display.

Herewith, in the other embodiment according to the invention, the individual function module 130 measures the resource capacity being used in the host terminal 100, exchanges the measured resource capacity into the resource capacity being used in the network printer, acquires the upper limit value from the individual function module 130, and creates the log information which indicates that the resource capacity used by the individual function module 130 on the basis of the exchanged resource capacity and the acquired upper limit value.

Herewith, the individual function module 130 can verify whether the resource capacity used in the network printer reaches the upper limit value of the resource before introducing to the network printer. Accordingly, comparing to the related art, software can be easily developed and stable software can be developed.

In addition, in the other embodiment according to the invention, the used memory capacity being used by the individual function module 130, the used memory capacity and the number of derived classes being used for executing the individual function module 130 by the common function module 120 can be measured at every individual function module 130 which is the resource managing object.

Herewith, the resource capacity in which the common function module 120 uses in the network printer can be verified whether it reaches the upper limit value of the resource at every individual function module 130.

In addition, in other embodiment according to the invention, it is prohibited to secure the resource by the individual function module 130 on the basis of the exchanged resource capacity and the acquired upper limit value.

Accordingly, the individual function module 130 may be restricted not to use more resource capacity than the upper limit value.

In addition, in other embodiment according to the invention, the resource capacity is exchanged on the basis of the resource exchange table 22 which registers the exchange rate determined on the basis of the resource capacity used in the predetermined conditions in the host terminal 100 and the resource capacity used in the predetermined conditions in the network printer.

Accordingly, the resource capacity may be exactly calculated between the host terminal 100 and the network printer.

In addition, in other embodiment according to the invention, the corresponding exchange rate is acquired from the resource exchange table 22 according to a kind of the resource being used by the common function module 120 and the individual function module 130, and the resource capacity is exchanged on the basis of the acquired exchange rate.

Herewith, because the resource may be exchanged according to the kind of the resource being used by the common function module 120 and the individual function module 130, it may be additionally possible to precisely exchange the resource capacity between the host terminal 100 and the network printer.

In addition, in the other embodiment according to the invention, the corresponding exchange rate is acquired from the resource exchange table 22 according to a form of the resource being used by the common function module 120 and the individual function module 130, and the resource capacity is exchanged on the basis of the acquired exchange rate.

Herewith, because the resource may be exchanged according to the form of the resource being used by the common function module 120 and the individual function module 130, it may be additionally possible to precisely exchange the resource capacity between the host terminal 100 and the network printer.

In addition, in the embodiment according to the invention, the resource exchange table 22 determines the exchange rate for a plurality of test modules on the basis of the resource capacity being used by the test module of the host terminal 100 and the network printer, and registers the largest upper limit value of the test module.

Herewith, because the resource exchange table 22 includes the largest upper limit value of the exchange rate determined for each test module, the resource capacity being used by the common function module 120 and the individual function module 130 can be estimated in large quantities. Accordingly, the operation of the individual function module 130 can be certainly guaranteed.

In addition, in the embodiment according to the invention, when the log information from the log file is read, it is determined whether or not the resource capacity being used by the individual function module 130 reaches the upper limit value on the basis of the read log information. In the case when the resource capacity does not reach the upper limit value, the electronic signature information is added to the execution file of the individual function module 130.

Herewith, because the electronic signature information is added to only the corresponding individual function module 130 whose using resource capacity does not reach the upper limit value, the operation of the individual function module 130 can be certainly guaranteed.

In addition, in the embodiment according to the invention, when the log information from the log file is read, it is determined whether or not the individual function module 130 can be installed in the network printer on the basis of the read log information. In the case that the individual function module 130 can be installed in the network printer, the electronic signature information is added to the execution file of the individual function module 130.

Herewith, because the electronic signature information is added to only the corresponding individual function module 130 which can be installed in the network printer, the operation of the individual function module 130 can be certainly guaranteed.

In addition, in the first embodiment according to the invention, the resource measuring unit 16 and step S305, S405, and S703 correspond to the resource measuring device according to the first, fifth, ninth, or tenth aspect of the invention. The resource exchanging unit 24 and step S306, S406, S509, and S704 correspond to the resource exchange device according to the first, fifth, ninth, or tenth aspect of the invention. The upper limit value acquiring unit 18 and step S211 correspond to the resource restricting information acquiring device according to the first, fifth, ninth, or tenth aspect of the invention. The log information creating unit 26 and step S321, S419, S521, and S715 correspond to the log information creating device according to the first, fifth, ninth, or tenth aspect of the invention.

In addition, in the first embodiment according to the invention, the log information acquiring unit 28 and step S900 correspond to the log information acquiring device according to the first aspect of the invention and step S900 corresponds to a log information acquiring step according to the fifth, ninth, or tenth aspect of the invention. The operation determining unit 30 and step S902 correspond to the operation determining device and step S900 corresponds to an operation determining step according to the fifth, ninth or tenth aspect of the invention. The module certifying unit 32 and step S910 correspond to the software certifying unit, and step S910 corresponds to the software certifying step according to the fifth, ninth, or tenth aspect of the invention.

In addition, in the first embodiment according to the invention, the electronic signature information corresponds to certifying information according to the first, fifth, ninth, or tenth aspect of the invention, and the CPU 50 corresponds to the operating device according to the tenth aspect of the invention.

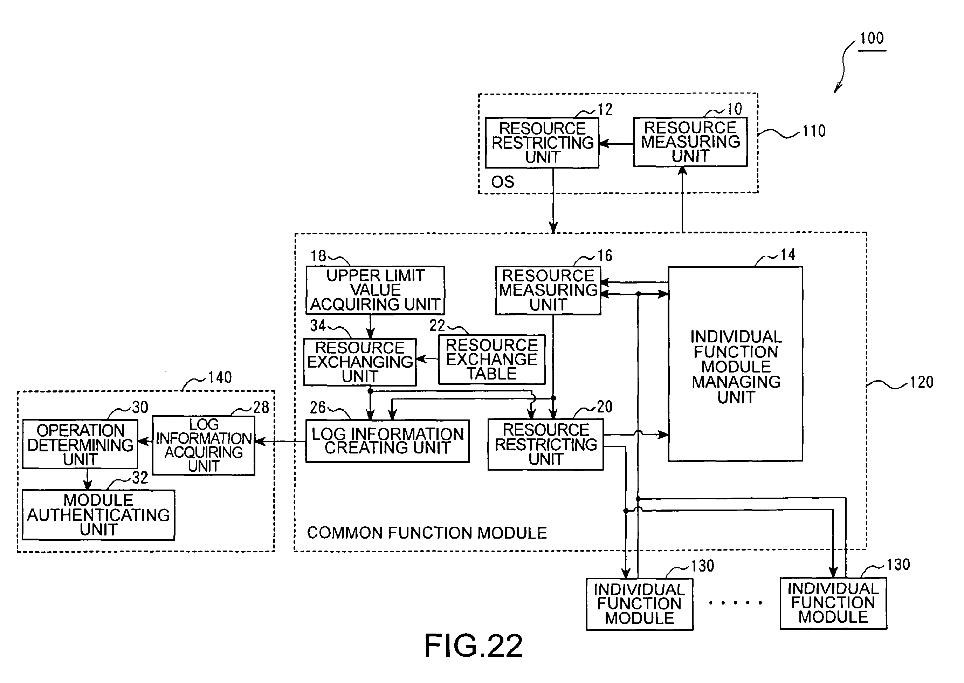

Next, the second embodiment according to the invention will be described by referring to the drawings. The Fig. 22 to Fig. 25 show a software certifying system, a software certifying program, and the second embodiment of the software certifying method according to the invention.

In the embodiment according to the invention, the software certifying system, the software certifying program, and the software certifying method are applied to the case of emulating a JAVA (registered trademark) class set in order to control the operation of the network printer in an execution environment of the JAVA (registered trademark) application on the host terminal 100 as shown in Fig. 22. In a way of exchanging the upper limit value of the resource is different from the first according to the invention. Hereinafter, only the part which is different from the first embodiment will be described and the other parts which are duplicated with the first embodiment will be omitted by using the same reference numbers.

At first, functional outline of the host terminal 100 according to the invention will be described.

Fig. 22 is a functional block diagram illustrating the functional outline of the host terminal 100.

The common function module 120, as shown in Fig. 22, includes an individual function module managing unit 14, a resource measuring unit 16, an upper limit value acquiring unit 18, a resource restricting unit 20, a resource exchange table 22, a log information creating unit 26, and a resource exchanging unit 34 which exchanges the resource capacity.

The resource exchanging unit 34 exchanges the resource capacity acquired in the upper limit value acquiring unit 18 into an upper limit value in the host terminal 100 on the basis of the resource exchange table 22.

The resource restricting unit 20 restricts the resource capacity used by the individual function module 130 and the resource capacity used by the individual function module managing unit 14 for executing the own individual function module 130 in order to make the resource capacity measured in the resource measuring unit 16 be less than the upper limit value exchanged in the resource exchanging unit 34.

The log information creating unit 26 creates log information displaying that the resource capacity being used by the individual function module 130 reaches the upper limit value when the resource capacity measured in the resource measuring unit 16 is equal to or more than the upper limit value exchanged in the resource exchanging unit 34.

Next, the configuration of the host terminal 100 will be described.

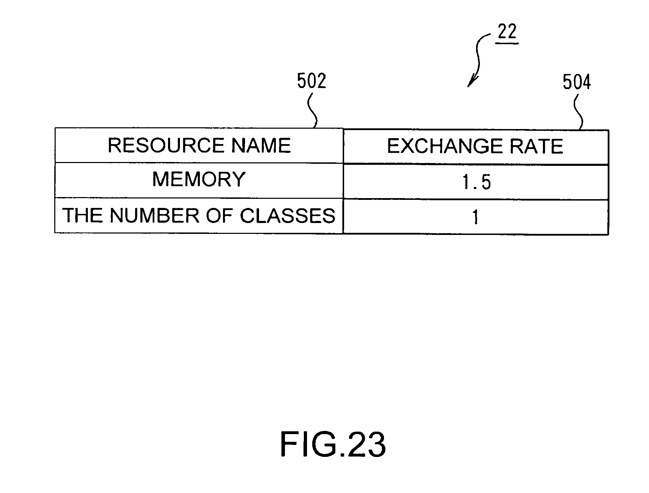

The memory device 62 memorizes the resource exchange table 22 in Fig. 23 in place of the resource exchange table 22 in Fig. 7.

Fig. 23 is a view illustrating data structure of the resource exchange table 22.

In the resource exchange table 22, as shown in Fig. 23, a record is registered according to the kind of the resource and the resource used state. Each record includes a field 502 for registering the title of the resource and a field 504 for registering the exchange rate.

In the embodiment of Fig. 23, the first record includes a 'memory' as the resource title and '1' as the exchange rate, respectively. The upper limit value of the memory capacity is exchanged in the host terminal 100 by the individual function module 130 which divides the upper limit value of the memory capacity in the network printer by the exchange rate of '1'.

The second record includes the 'number of the class' as the resource title and '1' as the exchange rate, respectively. The number of class capable of being derived in the host terminal 100 is exchanged by the individual function module 130 which divides the upper limit value of the number of classes capable of being derived in the host terminal 100 by the exchange rate of '1'.

In addition, the resource exchange table 22 determines the exchange rate according to a plurality of test modules on the basis of the resource capacity being used by the test module in the host terminal 100 and the network printer, and registers the upper limit value among the exchange rates determined according to each test module.

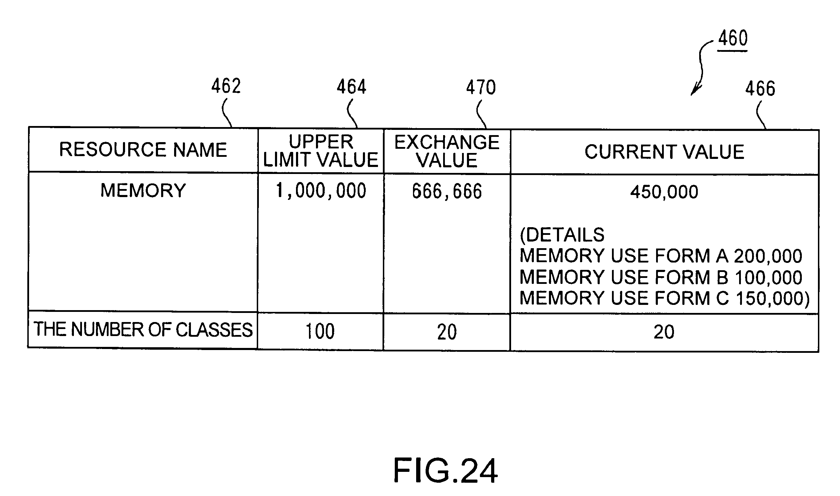

The memory device 62, additionally, stores the resource managing table 460 in Fig. 24 in place of the resource managing table 460 in Fig. 8.

Fig. 24 is a view illustrating the data structure of the resource managing table 460.

The resource managing table 460, as shown in Fig. 24, includes one record according to the kind of the resource. Each record includes a field 462 for registering the title of the resource, a field 464 that the individual function module 130 registers the upper limit value of the resource in the network printer, a field 470 for registering the value that the value of the field 464 is exchanged into the upper limit value in the host terminal 100, and a field 466 for registering the resource capacity in which the individual function module 130 currently uses in the host terminal 100.

In the other embodiment of Fig. 24, the first record includes '1000000' as the upper limit value and '666666' as the exchanging value, respectively. That is, the upper limit value of the memory of the individual function module 130 in the network printer is 1000000 byte and the value (hereinafter, exchanged memory upper limit value) exchanged into the upper limit value of the memory capacity in the host terminal 100 is 666666 byte. The exchanged memory upper limit value, referring to the resource exchange table 22 in Fig. 23, may be calculated as 1000000/1.5 = 666666.

The second record includes '100' as the upper limit value and '20' as the exchanging value, respectively. That is, the upper limit value of the number of classes in which the individual function module 130 may derive in the network printer is 100 and the value (hereinafter, exchanged classes upper limit value) exchanged into the upper limit value of the number of class capable of being derived in the host terminal 100 is 20. The exchanged class upper limit value, referring to the resource exchange table 22 in Fig. 23, can be calculated as 20/1 = 20.

Next, a process being executed in the host terminal 100 will be described.

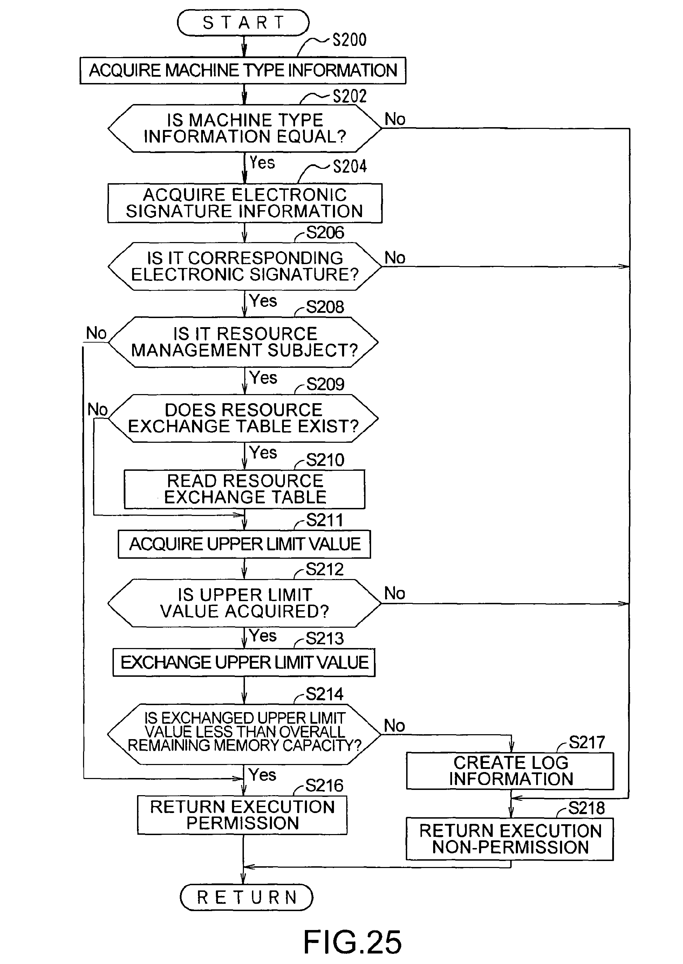

The CPU 50, in place of the execution propriety determining process in Fig. 11, executes the execution propriety determining process shown in the flowchart of Fig. 25.

Fig. 25 is a flowchart illustrating the execution propriety determining process.

If the execution propriety determining process is executed in step S118, as shown in Fig. 25, the process proceeds to step S213 through steps S200 to S212.

In step S213, the upper limit value is exchanged in the host terminal 100 by the exchange rate corresponding to acquired upper limit value acquired from the read resource exchange table 22 and the acquired upper limit value is divided by the acquired exchange rate.

Next, the process proceeds to step S214, it is determined that the exchanged memory upper limit value is less than all of the remaining memory. If the exchanged memory upper limit value is less than all of the remaining memory (Yes), the process proceeds to step S216. Otherwise (No), the process proceeds to step S217.

Even though steps S306, S406, S509, and S704 are processed in the first embodiment, those steps are not necessary in this embodiment.

Also, in the first embodiment, the exchanged memory capacity and the number of exchanged classes are managed in steps S313, S320, S418, S517, S520, and S714, but in this embodiment, the number of deriving classes and the memory capacity used in the host terminal 100 are managed.

Also, in the first embodiment, the used memory capacity and the number of deriving classes in the network print are managed in steps S308, S408, S512, and S706, but in this embodiment, the exchanged memory upper limit value and the exchanged memory are managed.

Next, an operation according to the embodiment of the invention will be described.

At first, the case of executing the individual function module 130 which is the resource managing object will be described. -

In the host terminal 100, the individual function module controlling process is executed by the common function module 120. In the individual function module controlling process, in the case that the individual function module 130 to be deleted exists, the corresponding individual function module 130 is deleted through steps S102 to S110. Then, through step S114, if the number of currently deriving module is less than the upper limit value, through steps S116 and S118, the corresponding individual function module 130 is read, and it is determined whether or not the read individual function module 130 is executed or not. In the execution propriety determining process, the upper limit value acquired from the resource restricting information 400 through step S213 is exchanged to the upper limit value in the host terminal 100. And then, the individual function module 130 includes the matching kind information and corresponding electronic signature information. When the exchanged memory upper limit value is less than all of the remaining memory capacity, the individual function module 130 is permitted to be executed.

If the individual function module 130 is permitted to be executed, the resource managing table 460 is created through steps S124 to S128, '1' is added to the number of currently deriving module, and the individual function module 130 is derived. In the module deriving process, the number of deriving classes and the used memory capacity of the individual function module 130 are added through steps S510, S305, and S307. At this time, if any one of the number of deriving classes or the used memory capacity is more than the exchanged upper limit value (hereinafter, refer to number of exchanged classes and the exchanged memory upper limit value), the error is notified so as to stop reading the class and creating the instance while the log information displaying that the number of deriving classes or the used memory capacity of the individual function module 130 reaches the upper limit value is created through steps S521 and S522, or S321 and S322.

Further, in the case when both the number of deriving classes and the used memory capacity are less than the exchanged upper limit value, the class of the individual function module 130 is read, the instance of the read class is created, and the event listener of the individual function module 130 is registered through steps S514, S310, and S318. In the event listener registering process, both the number of deriving classes and the used memory capacity of the individual function module 130 are added through steps S510, S405, and S407. At this time, if any one of the number of deriving classes or the used memory capacity is more than the exchanged upper limit value, the error is informed so as to stop reading the class and creating the instance while the log information indicating that the number of deriving class or the used memory capacity of the individual function module 130 reaches the upper limit value is created through steps S521 and S522, or S419 and S420.

Further, in the case when both the number of deriving classes and the used memory capacity are less than the exchanged upper limit value, the event listener class is read, the instance of the event listener class is created, and the event listener of the created instance is registered in the event listener execution list through steps S514, S410, and S416.

On the contrary, in the host terminal 100, the event listener controlling process is executed by the common function module 120. In the event listener controlling process, the used memory capacity of the individual function module 130 which is the creating destination of the event listener to be executed is added through steps S703 and S705. At this time, if the used memory capacity is equal to or more than the exchanged upper limit value, the error is informed so as to stop reading the class and creating the instance while the log information indicating that the memory capacity being used by the individual function module 130 reaches the upper limit value is created through steps S715 and S716.

Further, if the used memory capacity is less than the exchanged upper limit value, the command included in the event listener is executed through step S710.

Accordingly, in the embodiment according to the invention, the resource capacity being used by the individual function module 130 in the host terminal 100 is measured, the upper limit value is acquired from the individual function module 130, the acquired upper limit value is exchanged to the upper limit value of the resource in the host terminal 100, and the log information indicating that the resource capacity being used by the individual function module 130 reaches the upper limit value is created on the basis of the measured resource capacity and exchanged upper limit value.

Accordingly, it can be verified if the resource capacity used by the individual function module 130 in the network printer reaches the upper limit value of the resource before being introduced to the network printer. Accordingly, as compared with the related art, software can be easily developed and stable software can be developed.

In the second embodiment according to the invention, the resource measuring unit 16 and steps S305, S405, and S703 correspond to the resource measuring device 16 according to the second, sixth, eleventh, or twelfth aspect of the invention. The resource exchanging unit 34 and step S213 correspond to the resource exchange device according to the second, sixth, eleventh, or twelfth aspect of the invention. Further, the upper limit value acquiring unit 18 and step S211 correspond to the resource upper limit value acquiring device according to the second, sixth, eleventh, or twelfth aspect of the invention. The log information creating unit 26 and step S321, S419, S521, and S715 correspond to the log information creating device according to the second, sixth, eleventh, or twelfth aspect of the invention.

In the second embodiment according to the invention, the log information acquiring unit 28 and step S900 correspond to the log information acquiring device according to the second aspect of the invention. The step S900 corresponds to step of acquiring the log information according to the sixth, eleventh, or twelfth aspect of the invention. The operation determining unit 30 and step S902 correspond to the operation determining device. Further, step S900 corresponds to step of determining the operation according to the sixth, eleventh, or twelfth aspect of the invention. The module certifying unit 32 and step S910 correspond to a software certifying device and step S910 corresponds to step of certifying the software according to the sixth, eleventh, or twelfth aspect of the invention.

In the second embodiment according to the invention, the electronic signature information corresponds to the certifying information according to the second, sixth, eleventh, or twelfth aspect of the invention. The CPU 50 corresponds to an operating device according to the twelfth aspect of the invention.

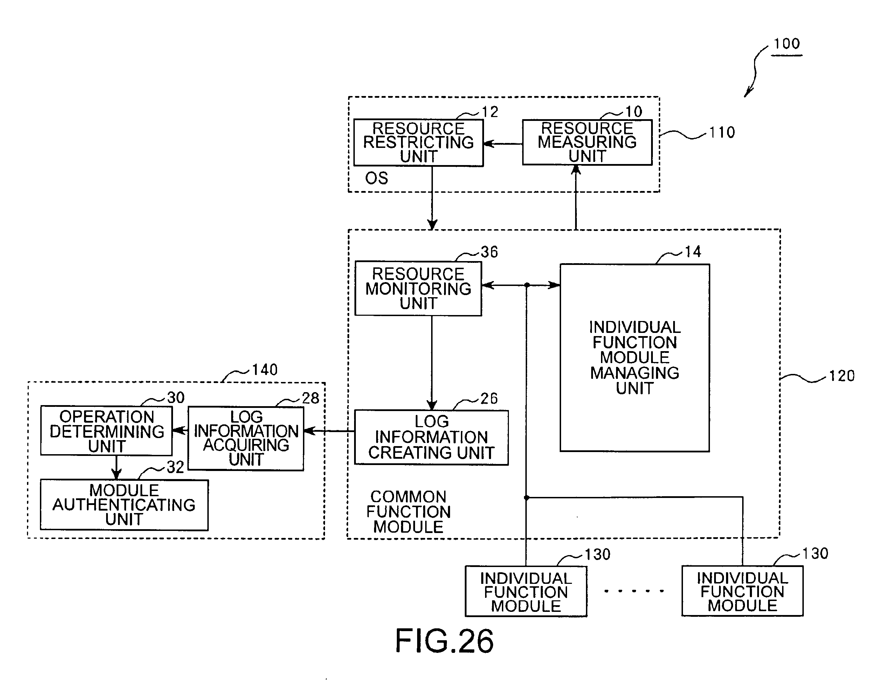

Next, the third embodiment according to the invention will be described referring to the drawings. The Fig. 26 to Fig. 30 show the software certifying system, software certifying program, and the software certifying method according to the third embodiment of the invention.

In this embodiment, the software certifying system, software certifying program, and the software certifying method according to the invention are applied to the case of emulating a JAVA (registered trademark) class set in order to control the operation of the network printer in an execution environment of the JAVA (registered trademark) application on the host terminal 100 as shown in Fig. 26. A way of certifying the individual function module 130 on the basis of the log information related to the file operation is different from the fist and the second embodiments according to the invention. Hereinafter, only the part which is different from the first and the second embodiments will be described and the other parts which are duplicated with the first embodiment will be omitted by using the same reference numbers.

At first, the functional outline of the host terminal 100 according to the invention will be described.

Fig. 26 is a functional block diagram illustrating the functional outline of the host terminal 100.

The common function module 120, as shown in Fig. 26, includes an individual function module managing unit 14, a log information creating unit 26, and a resource monitoring unit 36 for monitoring the resource state being used by the individual function module 130.

The log information creating unit 26 creates log information displaying the resource state on the basis of the monitored result of the resource monitoring unit 36.

Next, the configuration of the host terminal 100 will be described.

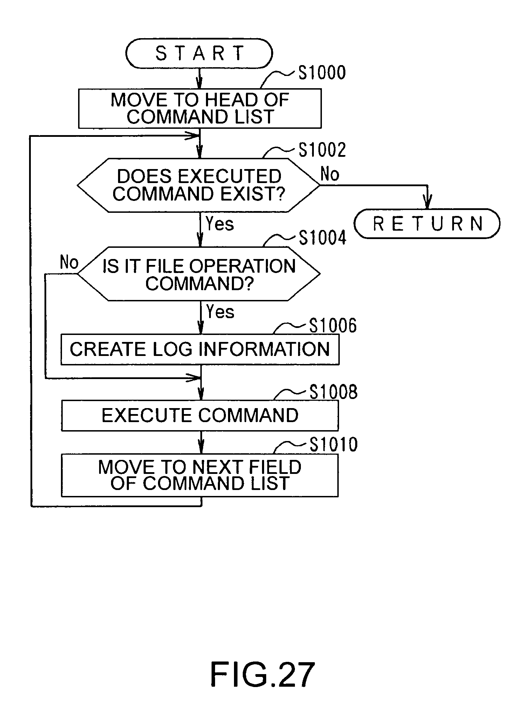

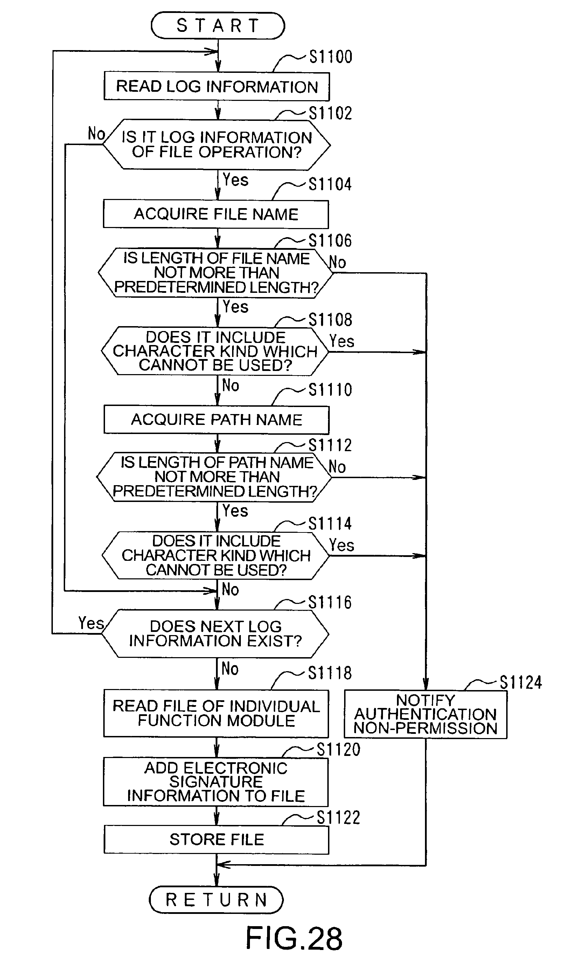

The CPU 50, in place of the event listener executing process in Fig. 16, executes the event listener executing process shown in the flowchart of Fig. 27. Also, in place of the module certifying process in Fig. 18, the module certifying process shown in the flowchart of Fig. 28 will be described.

At first, the event listener executing process will be described.

Fig. 27 is a flowchart illustrating the event listener executing process.

If the event listener executing process is executed in step S610, the process proceeds to step S1000 as shown in Fig. 27.

In step S1000, the program pointer is moved to the head of the command list included in the event listener, the process proceeds to step S1002, it is determined whether or not the command to be executed exists in the address indicated by the program pointer. In the case that the command to be executed exists in the address (Yes), the process proceeds to step S1004.

In step S1004, it is determined whether or not the command to be executed is a file operating command. In the case of the file operating command (Yes), the process proceeds to step S1006. The file operation may be, for example, to prepare the file, read the file, write the file, delete the file, check a file name, change the file name, check file property, change the file property, prepare a directory, delete the directory, check a directory name, change the directory name, check director property, and change the directory name. The property of the file or the directory includes the property for setting the access right such as the read-only mode.

In step S1006, the log information including the file name and the path name which are objects for the file operation, is created to be stored in the log file of the memory device 62. The process proceeds to step S1008.

In step S1008, the command of the address indicated by the program pointer is executed, the process proceeds to step S1010, the program pointer is shifted to the next command list included in the event listener, and the process proceeds to step S1002.

On the contrary, in step S1004, if the command is not the file operating command (No), the process proceeds to step S1008.

On the contrary, in step S1002, if the command to be executed does not exist (No), the series of processes are terminated and the process returns to the original process.

Next, the module certifying process will be described.

Fig. 28 is a flowchart illustrating the module certifying process.

If the module certifying process is executed by the CPU 50, the process proceeds to step S1100 as shown in Fig. 28.

In step S1100, the log information is read from the log file of the memory device 62, the process proceeds to step S1102, and it is determined whether the read log information is related to the file operation. In the case that the read log information is related to the file operation (Yes), the process proceeds to step S1104.

In step S1104, the file name is acquired from the read log information, the process proceeds to step S1106, and it is determined whether the acquired file name is not more than the predetermined length (length capable of corresponding in the network printer). If the acquired file name is not more than the predetermined length (Yes), the process proceeds to step S1108.

In step S1108, it is determined whether or not the acquired file name includes a character (Chinese character, and so on) which can not be used in the network printer. If the acquired file name does not include the unusable character (No), the process proceeds to step S1110.

In step S1110, the path name is acquired from the read log information, the process proceeds to step S1112, and it is determined whether the acquired path name is less than the predetermined length. If the acquired path name is less than the predetermined length (Yes), the process proceeds to step S1114.

In step S1114, it is determined whether or not the acquired path name includes the unusable character. If the acquired path name does not include the unusable character (No), the process proceeds to step S1116.

In step S1116, it is determined whether non-processed log information exists in the log file of the memory device 62. If the non-processed log information does not exist (No), the process proceeds to step S1118, the execution file of the individual function module 130 is read from the memory device 62, and the process proceeds to step S1120.

In step S1120, the electronic signature information is added in the read execution file, the process proceeds to step S1122, the execution file including the electronic signature information is stored in the memory device 62, the series of processes are terminated and the process returns to the original process.

On the contrary, in step S1116, if the non-processed log information exists (Yes), the process proceeds to step S1100.

On the contrary, if the acquired file name is more than the predetermined length (No) in step S1106, if the acquired file name includes the unusable character (Yes) in step S1108, if the acquired path name is more than the predetermined length (No) in step S1112, or if the acquired path name includes the unusable character (Yes) in step S1114, the process proceeds to step S1124 and a message showing that the individual function module 130 can not be certified in the display device 64 and the series of processes are terminated and the process returns to the original process.

On the contrary, if the read log information is not related to the file operation (No), the process proceeds to step S1116.

Next, an operation according to other embodiment of the invention will be described.

In the host terminal 100, if the file operating command is executed by the individual function module 130, the log information including the file name and path name to be a file operating object is created in step S1006.

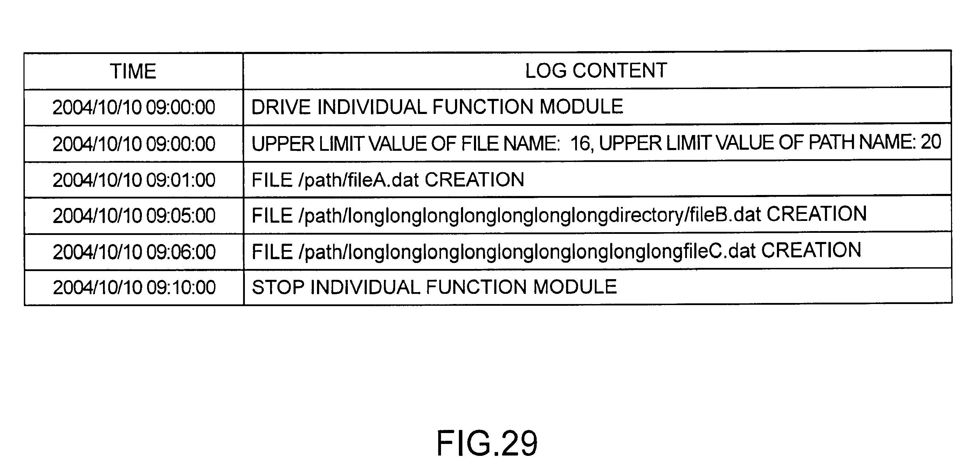

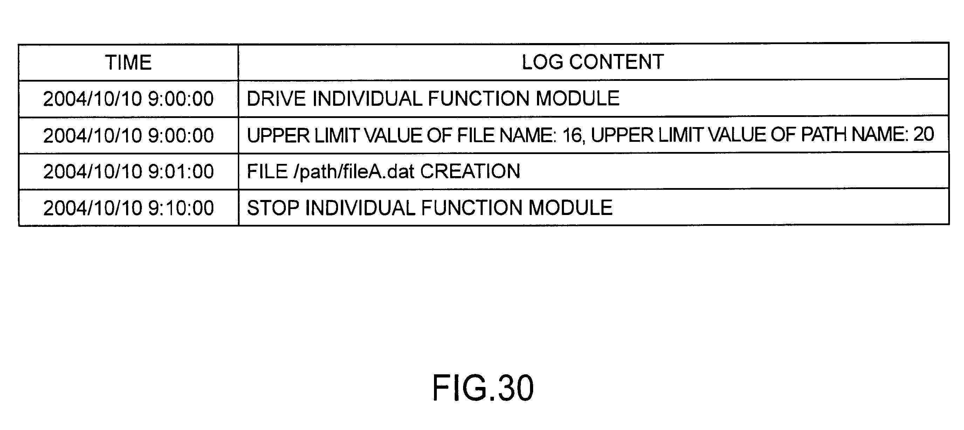

Fig. 29 and Fig. 30 show contents of the log file in the case of operating the file.

In the case of operating the file, the log file, as shown in Fig. 29 and Fig. 30 includes the log information indicating that the individual function module 130 is derived or stopped, the log information indicating the upper limit value of the length of the file name and the path name in the network printer, and the log information including the file name and the path name of the file operating object. In the embodiment of Fig. 29, the third to fifth records include the log information related to the file operation, and in the embodiment in Fig. 30, the third record includes the log information related to the file operation.

In the host terminal 100, if the log file is created, through steps S1100 to S1116 repeatedly, the log information is sequentially read from the log file, the file name and the path name are acquired from the read log information, and then it is determined whether or not the acquired file name and the path name include the unusable character. As the log file shown in Fig. 30, in the log information related to the file operation included in the log file, if the file name and the path name are less than the predetermined length and if the file name and the path name do not include the unusable character, the execution file of the individual function module 130 is read, the electronic signature information is added to the read execution file, and the execution file is stored through steps S1118 to S1122.

Further, as the log file shown in Fig. 29, if the file name and the path name are longer than the predetermined length in any of the log information related to the file operation included in the log file, a message showing that the log information can not be certified through step S1124. In the embodiment of Fig. 29, the fourth and fifth records are corresponded in above conditions.

Furthermore, in the embodiment according to the invention, the log information related to the file operation is read from the log file, and it is determined whether the file name and the path name are not longer than the predetermined length on the basis of the read log information. If the file name and the path name are not longer than the predetermined length, the electronic signature information is added to the execution file of the individual function module 130.

Accordingly, because the electronic signature information is added to only the individual function module 130 having a length less than the length corresponding to the file name and the path name to be the file operating objects in the network printer, the operation of the individual function module 130 can be certainly guaranteed.

In addition, in the embodiment according to the invention, the log information corresponding to the file operation is read from the log file, and it is determined whether the file name and the path name include the unusable character on the basis of the read log information. In the case that the file name and the path name do not include the unusable character, the electronic signature information is added to the execution file of the individual function module 130.

Accordingly, because the electronic signature information is added to only the individual function module 130 which does not include unusable character in the file name and the path name to be the file operating objects in the network printer, the operation of the individual function module 130 can be certainly guaranteed.

In the third embodiment according to the invention, the resource monitoring unit 36 and step S1004 correspond to the resource monitoring device according to the third, seventh, thirteenth, or fourteenth aspect of the invention. The log information creating unit 26 and step S1006 corresponds to the log information creating device according to the third, seventh, thirteenth, or fourteenth aspect of the invention. The log information acquiring unit 28 and step S1100 correspond to the log information acquiring device according to the third aspect of the invention. The step S1100 corresponds to step of acquiring the log information according to the seventh, thirteenth, or fourteenth aspect of the invention. The operation determining unit 30 and step S1106, S1108, S1112, and S1114 correspond to the operation determining device according to the third aspect of the invention. Step S1106, S1108, S1112, and S1114 correspond to step of determining the operation according to the seventh, thirteenth, or fourteenth aspect of the invention.

Additionally, in the third embodiment according to the invention, the module certifying unit 32 and step S1120 correspond to the software certifying device according to the third aspect of the invention. Step S1120 corresponds to step of certifying the software according to the seventh, thirteenth, or fourteenth aspect of the invention. The electronic signature information corresponds to the certifying information according to the third, seventh, thirteenth, or fourteenth aspect of the invention. The CPU 50 corresponds to the operating device according to the fourteenth aspect of the invention.

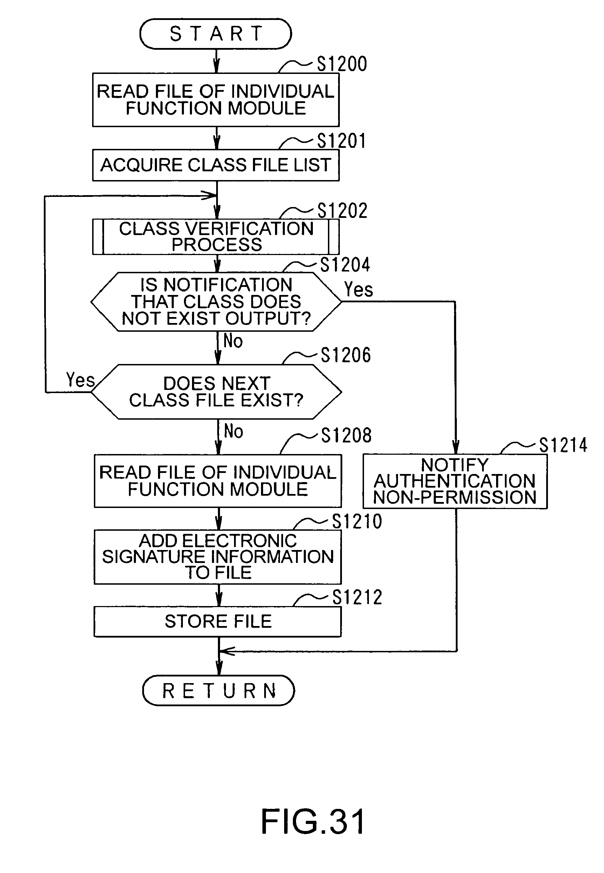

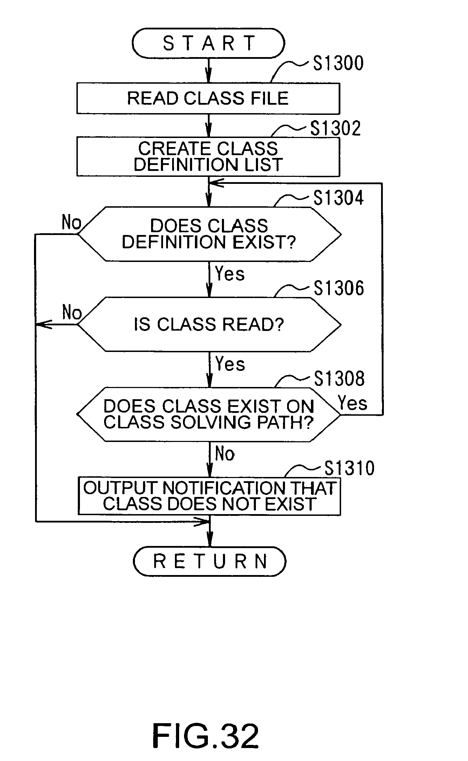

Next, the fourth embodiment according to the invention will be described referring to the drawings. Fig. 31 and Fig. 32 show the software certifying system, the software certifying program, and the software certifying method according to the fourth embodiment of the invention.

In this embodiment, the software certifying system, software certifying program, and the software certifying method are applied to the case of emulating a JAVA (registered trademark) class set in order to control the operation of the network printer in an execution environment of the JAVA (registered trademark) application on the host terminal 100. A way of certifying the individual function module 130 on the basis of the execution file of the individual function module 130 is different from the first to the third embodiments according to the invention. Hereinafter, only the part which is different from the first to the third embodiments will be described and the other parts which are duplicated with the first to third embodiments will be omitted by using the same reference number.

At first, the configuration of the host terminal 100 will be described.

The CPU 50, in place of the module certifying process in Fig. 18, executes the module certifying process shown in the flowchart of Fig. 31.

Fig. 31 is a flowchart illustrating the module certifying process.

As shown in Fig. 31, if the module certifying process is executed by the CPU 50, the process proceeds to step S1200.

In step S1200, the execution file of the individual function module 130 is read, the process proceeds to step S1201, a class file list is acquired from the execution file of the individual function module 130, the process proceeds to step S1202, a class verifying process which verifies the class on the basis of the acquired class file list is executed, and the process proceeds to step S1204.

In step S1204, it is determined whether or not a class absence notification is output from the class verifying process. If the class absence notification is not output (No), the process proceeds to step S1206.

In step S1206, it is determined whether or not the non-processed log information exists in the log file of the memory device 62. If the non-processed log information does not exist (No), the process proceeds to step S1208, the execution file of the individual function module 130 is read from the memory device 62, the process proceeds to step S1210.

In step S1210, the electronic signature information is added to the read execution file, the process proceeds to step S1212, the execution file including the electronic signature information is stored in the memory device 62, and then the series of processes are terminated and the process returns to the original process.

On the contrary, in step S1206, if the non-processed log information exists (Yes), the process proceeds to step S1202.

On the contrary, in step S1204, if the class absence notification is output (Yes), the process proceeds to step S1214, a message showing that the individual function module 130 can not be verified is displayed in the display device 64, and then the series of processes are terminated and the process returns to the original process.

Next, the class verifying process of step S1202 will be described.

Fig. 32 is a flowchart illustrating the class verifying process.

If the class verifying process is executed in step S1202, the process proceeds to step S1300 as shown in Fig. 32.

In step S1300, the class file is read on the basis of the acquired class file list, the process proceeds to step S1302, a class definition list is created from the read class file, and the process proceeds to step S1304.

In step S1304, it is determined whether or not the created class definition list includes non-verified class definition. If the created class definition list includes non-verified class definition (Yes), the process proceeds to step S1306. It is determined whether the class is successfully read. If the class is successfully read (Yes), the process proceeds to step S1308.

In step S1308, it is determined whether the class exists on the class resolution path on the basis of the class definition. If the class does not exist on the class resolution path (No), the process proceeds to step S1310, the class absence notification is output, and the series of processes are terminated and the process returns to the original process.

On the contrary, in step S1308, if the class exists on the class resolution path (Yes), the process proceeds to step S1304.

On the contrary, if the class is not successfully read (No) in step S1306 or the non-verified class definition does not exist (No) in step S1304, the series of processes are terminated and the process returns to the original process.

Next, an operation according to the other embodiment of the invention will be described.

In the host terminal 100, it is determined whether the class being used by the individual function module 130 includes only the class which can be executed in the network printer through steps S1202 to S1206, repeatedly. If the class being used by the individual function module 130 includes only the class which can be executed in the network printer, the execution file of the individual function module 130 is read and the electronic signature information is added and stored to the read execution file through steps S1208 to S1212.

Further, if any class being used by the individual function module 130 is the class which can not be executed in the network printer a message showing that the class can not be certified through step S1214.

Furthermore, in this embodiment according to the invention, the execution file of the individual function module 130 is acquired, and it is determined whether the class being used by the individual function module 130 includes the class which can be used in the network printer on the basis of the acquired execution file. In the case of the class which can be used in the network printer, the electronic signature information is added to the execution file of the individual function module 130.

Accordingly, because the electronic signature information is added to only the individual function module 130 using the class which can be used in the network printer, the operation of the individual function module 130 can be certainly guaranteed. For example, if a developer with untrue intent rewrites the binary of the class when transferring from the host terminal 100 to the network printer, the class does not accurately work in the network printer. It may be possible to prevent this kind of fraudulent act.

In the fourth embodiment according to the invention, in step S1200, the execution file acquiring device according to the fourth aspect of the invention corresponds to the execution file acquiring step according to the eighth or fifteenth aspect of the invention. Step S1204 corresponds to the second operation determining device according to the fourth aspect of the invention or corresponds to the second operation determining step according to the eighth or fifteenth aspect of the invention. Step S1210 corresponds to the software certifying unit according to the fourth aspect of the invention or the software certifying step according to the eighth or fifteenth aspect of the invention.

In the first and second embodiments according to the invention, the resource exchange table 22 is configured by registering the upper limit value among the exchange rate determined according to each test module but the invention is not limited above-described embodiments and examples, and the invention can be configured by registering the average value among the exchange rate determined according to each test module.

Further, because the upper limit value among the exchange rates determined according to each test module is registered in the resource exchange table 22, it may be possible to control the resource capacity used in the network printer while guaranteeing the operation of the function model reliability.

In the first and the second embodiments according to the invention, the log information is created for showing whether the resource capacity being used by the individual function module 130 reaches the upper limit value, but the invention is not limited above-described embodiment. The message showing that the resource capacity being used by the individual function module 130 reaches the upper limit value can be displayed on the display device 64.

Further, in the first and the second embodiments according to the invention, an example that '1' as the exchange rate is registered in the resource exchange table 22. But the invention is not limited to the above-described embodiments, the other value can be registered depending on a difference in specifications between the host terminal 100 and the network printer

Furthermore, in the first and the second embodiments according to the invention, while the used memory capacity and the number of deriving classes are restricted as the resource capacity, the invention is not limited above-described embodiment and can restrict socket connecting number, file connecting number, file number, file contents, class size, ZIP memory contents, CPU using amount, socket communication amount, and file reading amount.

Furthermore, the first to the fourth embodiments according to the invention are constructed individually, but the invention can be constructed by combining the other embodiments, that is, the determining process of step S902 and S904, the determining process of step S1106, S1108, S1112, and S1114, and the determining process of step S1204 can be arbitrarily combined with each other. Most preferably, the electronic signature information is added to the individual function module 130 only when satisfying all of the certifying conditions corresponding to the determining processes.

Furthermore, in the first to the fourth embodiments according to the invention, for executing the processes shown in the flowcharts of Figs. 10 to 18, 25, 27, 28, 31, and 32, the case of executing the controlling program stored in the ROM 52 in advance is described, but the invention is not limited to this, the program representing these sequences can be read and stored to RAM 54 from a record medium including the program to execute the program.

The record medium can be a semiconductor record medium such as RAM or ROM, a magnetic record medium such as an FD or an HD, an optical reading type record medium such as a CD, a CDV, an LD, or a DVD, and a magnetic/optical record medium such as an MO. The record medium can be any or all of the record mediums which the computer can read regardless of the electronic, the magnetic, and the optical medium.

Furthermore, in the first to fourth embodiments of the invention, the software certifying system, the software certifying program, and the software certifying method are applied to the case of emulating a JAVA (registered trademark) class set in order to control the operation of the network printer in an execution environment of the JAVA (registered trademark) application on the host terminal 100, however, the invention is not limited to the above-described embodiments but various modifications and changes of the invention can be made without deviating from the spirit and scope of the invention. For example, in place of the network printer, the invention can be applied to a projector, an electronic paper, a home gateway, a computer, a PDA (Personal Digital Assistant), a network storage, an audio instrument, a cellular phone, a PHS (registered trademark) (Personal Handyphone System), a watch type PDA, an STB (Set Top Box), a POS (Point Of Sale) terminal, a FAX machine, a telephone (may include IP telephone), and other devices.

## Claims

1. A software authentication system which authenticates software including a function module on the basis of log information created by a resource management system, the resource management system including: a resource measuring unit that measures an amount of resources used by the function module in a first execution environment; a resource exchanging unit that exchanges the amount of resources measured by the resource measuring unit with an amount of resources used by the function module in a second execution environment; a resource restriction information acquiring unit that acquires resource restriction information indicating a resource restriction condition; a log information creating unit that creates the log information indicating that the amount of resources used by the function module has reached an upper limit value on the basis of the amount of resources exchanged by the resource exchanging unit and the resource restriction information acquired by the resource restriction information acquiring unit, the software authentication system comprising:
a log information acquiring unit that acquires the log information;
an operation determining unit that determines whether the amount of resources used by the function module does not reach an upper limit value on the basis of the log information acquired by the log information acquiring unit; and
a software authenticating unit that adds authentication information to the software when it is determined by the operation determining unit that the amount of resources used by the function module does not reach the upper limit value.

2. A software authentication system which authenticates software including a function module on the basis of log information created by a resource management system, the resource management system including: a resource measuring unit that measures an amount of resources used by the function module in a first execution environment; a resource upper limit value acquiring unit that acquires an upper limit value of resources in a second execution environment; a resource exchanging unit that exchanges the upper limit of resources acquired by the resource upper limit value acquiring unit with an upper limit value of resources in the first execution environment; and a log information creating unit that creates the log information indicating that the amount of resources used by the function module has reached an upper limit value on the basis of the amount of resources measured by the resource measuring unit and the upper limit value of resources exchanged by the resource exchanging unit, the software authentication system comprising:
a log information acquiring unit that acquires the log information;
an operation determining unit that determines whether the amount of resources used by the function module does not reach an upper limit value on the basis of the log information acquired by the log information acquiring unit; and
a software authenticating unit that adds authentication information to the software when it is determined by the operation determining unit that the amount of resources used by the function module does not reach the upper limit value.

3. A software authentication system which authenticates software including a function module on the basis of log information created by a resource management system, the resource management system including: a resource monitoring unit that monitors a use situation of resources used by the function module in a second execution environment different from a first execution environment; and a log information creating unit that creates the log information indicating the resource use situation on the basis of the monitoring result of the resource monitoring unit, the software authentication system comprising:
a log information acquiring unit that acquires the log information;
an operation determining unit that determines whether the resource use situation is suitable for the first execution environment on the basis of the log information acquired by the log information acquiring unit; and
a software authenticating unit that adds authentication information to the software when it is determined by the operation determining unit that the resource use situation is suitable for the first execution environment.

4. The software authentication system according to claim 1, further comprising:
an execution file acquiring unit that acquires an execution file necessary for executing the function module; and
a second operation determining unit that determines whether a command or a command group constituting the function module is only composed of a command or a command group executed in the first execution environment on the basis of the execution file acquired by the execution file acquiring unit,
wherein the software authenticating unit adds authentication information to the software when it is determined by the second operation determining unit that the command or the command group constituting the function module is only composed of the command or the command group executed in the first execution environment.

5. A software authentication program which authenticates software including a function module on the basis of log information created by a resource management system, the resource management system including: a resource measuring unit that measures an amount of resources used by the function module in a first execution environment; a resource exchanging unit that exchanges the amount of resources measured by the resource measuring unit with an amount of resources used by the function module in a second execution environment; a resource restriction information acquiring unit that acquires resource restriction information indicating a resource restriction condition; a log information creating unit that creates the log information indicating that the amount of resources used by the function module has reached an upper limit value on the basis of the amount of resources exchanged by the resource exchanging unit and the resource restriction information acquired by the resource restriction information acquiring unit, the software authentication program comprising:
a program that makes a computer execute a process including:
acquiring the log information;
determining whether the amount of resources used by the function module does not reach an upper limit value on the basis of the log information acquired by the acquisition of the log information; and
adding authentication information to the software when it is determined by the determination that the amount of resources used by the function module does not reach the upper limit value.

6. A software authentication program which authenticates software including a function module on the basis of log information created by a resource management system, the resource management system including: a resource measuring unit that measures an amount of resources used by the function module in a first execution environment; a resource upper limit value acquiring unit that acquires an upper limit value of resources in a second execution environment; a resource exchanging unit that exchanges the upper limit value of resources acquired by the resource upper limit value acquiring unit with an upper limit value of resources in the first execution environment; and a log information creating unit that creates the log information indicating that the amount of resources used by the function module has reached an upper limit value on the basis of the amount of resources measured by the resource measuring unit and the upper limit value of resources exchanged by the resource exchanging unit, the software authentication program comprising:
a program that makes a computer execute a process including:
acquiring the log information;
determining whether the amount of resources used by the function module does not reach an upper limit value on the basis of the log information acquired by the acquisition of the log information; and
adding authentication information to the software when it is determined by the determination that the amount of resources used by the function module does not reach the upper limit value.

7. A software authentication program which authenticates software including a function module on the basis of log information created by a resource management system, the resource management system including: a resource monitoring unit that monitors a use situation of resources used by the function module in a second execution environment different from a first execution environment; and a log information creating unit that creates the log information indicating the resource use situation on the basis of the monitoring result of the resource monitoring unit, the software authentication program comprising:
a program that makes a computer execute a process including:
acquiring log information;
determining whether the resource use situation is suitable for the first execution environment on the basis of the log information acquired by the acquisition of the log information; and
adding authentication information to the software when it is determined by the determination that the resource use situation is suitable for the first execution environment.

8. A software authentication method which authenticates software including a function module on the basis of log information created by a resource management system, the resource management system including: a resource measuring unit that measures an amount of resources used by the function module in a first execution environment; a resource exchanging unit that exchanges the amount of resources measured by the resource measuring unit with an amount of resources used by the function module in a second execution environment; a resource restriction information acquiring unit that acquires resource restriction information indicating a resource restriction condition; a log information creating unit that creates the log information indicating that the amount of resources used by the function module has reached an upper limit value on the basis of the amount of resources exchanged by the resource exchanging unit and the resource restriction information acquired by the resource restriction information acquiring unit, the software authentication method comprising:
acquiring the log information;
determining whether the amount of resources used by the function module does not reach an upper limit value on the basis of the log information acquired by the acquisition of the log information; and
authenticating software by adding authentication information to the software when it is determined by the determination that the amount of resources used by the function module does not reach the upper limit value.

9. A software authentication method which authenticates software including a function module on the basis of log information created by a resource management system, the resource management system including: a resource measuring unit that measures an amount of resources used by the function module in a first execution environment; a resource upper limit value acquiring unit that acquires an upper limit value of resources in a second execution environment; a resource exchanging unit that exchanges the upper limit value of resources acquired by the resource upper limit value acquiring unit with an upper limit value of resources in the first execution environment; and a log information creating unit that creates the log information indicating that the amount of resources used by the function module has reached an upper limit value on the basis of the amount of resources measured by the resource measuring unit and the upper limit value of resources exchanged by the resource exchanging unit, the software authentication method comprising:
acquiring the log information;
determining whether the amount of resources used by the function module does not reach an upper limit value on the basis of the log information acquired by the acquisition of the log information; and
adding authentication information to the software when it is determined by the determination that the amount of resources used by the function module does not reach the upper limit value.

10. A software authentication method which authenticates software including a function module on the basis of log information created by a resource management system, the resource management system including: a resource monitoring unit that monitors a use situation of resources used by the function module in a second execution environment different from a first execution environment; and a log information creating unit that creates the log information indicating the resource use situation on the basis of the monitoring result of the resource monitoring unit, the software authentication method comprising:
acquiring the log information;
determining whether the resource use situation is suitable for the first execution environment on the basis of the log information acquired by the acquisition of the log information; and
adding authentication information to the software when it is determined by the determination that the resource use situation is suitable for the first execution environment.
